# EUROPEAN PATENT APPLICATION

(11) **EP 4 606 633 A1**
(43) Date of publication of application: **27.08.2025**
(21) Application number: 23880289.6
(22) Date of filing: 20.10.2023
(51) Int. Cl.: B60L 53/30, B60L 53/126, B60L 53/36, H02J 50/80, H04W 84/12

(54) **WIRELESS-LAN-BASED CHARGING COMMUNICATION APPARATUS AND METHOD FOR DYNAMIC WIRELESS POWER TRANSFER, AND HANDOFF METHOD**

(30) Priority: 21.10.2022 KR 20220136169; 21.10.2022 KR 20220136170
(71) Applicant: Hyundai Motor Company, Seoul 06797 (KR); Kia Corporation, Seoul 06797 (KR)
(72) Inventor: SEONG, Jae Yong, Hwaseong-si, Gyeonggi-do 18280 (KR)
(74) Representative: Viering, Jentschura & Partner mbB Patent- und Rechtsanwälte
(86) International application number: PCT/KR2023/016358
(87) International publication number: WO 2024/085714

(57) **Abstract**

A charging communication method according to the present disclosure may be performed by an electric vehicle communication controller (EVCC) in an electric vehicle and may include: performing an association with a supply equipment communication controller (SECC) correlated with a primary assembly transferring power to the electric vehicle based on compatibility information shared between the EVCC and the SECC; identifying the SECC providing a dynamic wireless power protocol (D-WPT) based on an SECC discovery protocol (SDP) related to the SECC; and identifying a common protocol applicable between the SECC and the EVCC.

## Description

### TECHNICAL FIELD

The present disclosure relates to a charging communication technology for an electric vehicle (EV) and, more specifically, to a charging communication technology for a dynamic wireless power transfer (D-WPT) using a wireless local area network (WLAN) technology.

### BACKGROUND ART

The description in this section merely provides background information of embodiments of the present disclosure and is not intended to specify prior arts of the present disclosure.

An electric vehicle (EV) is driven by an electric motor by power stored in a battery, and produces less pollution such as exhaust gas and noise compared with a conventional gasoline engine vehicle, and have advantages of fewer faults, a longer life span, and simplified driving operations.

The EVs may be classified into hybrid electric vehicles (HEVs), plug-in hybrid electric vehicles (PHEVs), and electric vehicles (EVs) based on a driving power source. The HEV has an engine as a main power source and a motor as an auxiliary power source. The PHEV has a motor and a battery as a main power source and an engine that is used when the battery is discharged. The EV has a motor but does not have an engine.

An electric vehicle charging system may be defined as a system that charges the battery mounted in the electric vehicle using electric power obtained from a commercial power grid or stored in an energy storage device. Such an electric vehicle charging system may have various forms depending on a type of the electric vehicle. For example, the electric vehicle charging system may include a conductive charging system using a cable or a non-contact wireless power transfer system.

During a charging session, a reception pad of a vehicle assembly (VA) mounted in the electric vehicle may form an inductive resonance coupling with a transmission pad of a ground assembly (GA) installed at a charging station or a charging spot and may charge the battery of the EV using electric power transferred from the ground assembly through the inductive resonance coupling.

When an electric vehicle is to be charged, a robot arm or manipulator may be used to supply power from an electric vehicle supply equipment (EVSE) to a charging inlet or charging port at a charging door of the electric vehicle.

In such a case, it may be required to define a procedure for a positioning between the electric vehicle and the manipulator and additional preparatory operations for the power supply in considerations of a variety of types of the charging inlets in the electric vehicle, a variety of types of the electric vehicle supply equipment, and a variety of charging methods.

A message sequence between the power grid and the EV may be defined in advance between a supply equipment communication controller (SECC) located on a grid side and an electric vehicle communication controller (EVCC) mounted in the EV, and may be realized by an exchange of a message pair of a request message and a response message.

Typically, the EV is supplied with the electric power to charge its battery by a charging method using an automatic coupling device, a wireless power transfer, or an AC charging, or DC charging. To charge the battery, the EV exchanges messages with the SECC related to a session setup, a vehicle positioning setup, a vehicle positioning, a pairing, an authentication and authorization setup, an authentication and authorization, a service discovery, service details, and a service selection.

For example, if the EV fails to find a compatible method for a positioning or a pairing for the charging using the automatic coupling device or the wireless power transfer after receiving a vehicle positioning setup response message, the EV may move from a session stop state to a service discovery state through a service renegotiation.

Recently, the introduction of a dynamic wireless power transfer (D-WPT) technology in addition to the static wireless power transfer (S-WPT) technology is being considered. However, a protocol for a message sequencing between the electric vehicle and the power grid for the D-WPT and rules for message parameters in the protocol have not been established in the industry or related industrial standards such as ISO 15118 standard.

### DISCLOSURE OF INVENTION

### TECHNICAL PROBLEM

To solve the above problem, one object of the present disclosure is to provide a charging communication method and apparatus for dynamic wireless power transfer (D-WPT) making use of a wireless local area network (WLAN) technology. Here, the dynamic wireless power transfer may be understood as a wireless power transfer performed while a vehicle or mobility is in motion.

Another object of the present disclosure is to provide a process of performing association, pairing, and SECC discovery protocol (SDP) between an electric vehicle communication controller (EVCC) and a supply equipment communication controller (SECC) using the WLAN when the electric vehicle is to be charged by the D-WPT service.

Another object of the present disclosure is to provide a method of performing a handoff process between SECCs when the electric vehicle is in motion while being charged by the D-WPT service.

Another object of the present disclosure is to provide a method of performing a handoff process between access points (APs) and SECCs when the electric vehicle is in motion while being charged by the D-WPT service in a multiple-AP environment.

Another object of the present disclosure is to provide a method of exchanging additional information for providing the D-WPT service taking into account changes in the a driving situation of an electric vehicle when the electric vehicle is being charged by the D-WPT service in a multiple-AP environment.

### TECHNICAL SOLUTION

According to an aspect of an exemplary embodiment, provided is a charging communication method for electric vehicle charging. The charging communication method is performed by an electric vehicle communication controller (EVCC) mounted in an electric vehicle and correlated with a secondary assembly receiving power from a primary assembly. The method includes: performing an association with a supply equipment communication controller (SECC) correlated with the primary assembly transferring power to the electric vehicle based on compatibility information shared between the EVCC and the SECC; identifying the SECC providing a dynamic wireless power protocol (D-WPT) based on an SECC discovery protocol (SDP) related to the SECC; and identifying a common protocol applicable between the SECC and the EVCC.

The operation of performing the association with the SECC may include: receiving a beacon message broadcast by the SECC as a part of a WLAN scanning process; transmitting an association request message to the SECC identified based on the beacon message; and receiving an association response message including information indicating a success of the association from the SECC.

The operation of identifying the SECC providing the D-WPT based on the SDP related to the SECC may include: broadcasting an SDP request message related to the EVCC; and receiving an SDP response message from an SDP entity related to the SECC.

The operation of identifying the common protocol applicable between the SECC and the EVCC may include: transmitting a supported application protocol request message to the SDP entity related to the SECC; and receiving a supported application protocol response message from the SDP entity.

The charging communication method according to an exemplary embodiment may further include: performing a negotiation for positioning, pairing, and alignment check in cooperation with the SECC; performing a vehicle positioning in cooperation with the SECC; and performing a pairing in cooperation with the SECC.

The operation of performing the negotiation for positioning, pairing, and alignment check in cooperation with the SECC may include: transmitting a first DWPT initial setup request message to the SECC and receiving a first DWPT initial setup response message from the SECC; transmitting a second DWPT initial setup request message including secondary assembly related information to the SECC and receiving a second DWPT initial setup response message including primary assembly related information from the SECC; and transferring the primary assembly related information to the secondary assembly
The operation of performing the vehicle positioning in cooperation with the SECC may include: transmitting a DWPT vehicle positioning request message to the SECC; monitoring information on a positioning process and performing the positioning in cooperation with the secondary assembly; transmitting a DWPT vehicle positioning completion request message to the SECC when the positioning is successfully completed; and receiving a DWPT vehicle positioning completion response message from the SECC.

The operation of performing the pairing in cooperation with the SECC may include: transmitting a first DWPT pairing request message to the SECC; receiving a first DWPT pairing response message from the SECC; transmitting a second DWPT pairing request message including information on whether a pairing is successful or not on an electric vehicle side; and receiving a second DWPT pairing response message including information on whether the pairing is successful or not on a primary assembly side.

The charging communication method according to an exemplary embodiment may further include: performing an alignment check in cooperation with the SECC; performing a cable check and precharging and then starting a power transfer in cooperation with the SECC; and monitoring and controlling a power transfer process in cooperation with the SECC.

The operation of performing the alignment check in cooperation with the SECC may include: transmitting a first DWPT alignment check request message to the SECC; receiving a first DWPT alignment check response message from the SECC; transmitting a second DWPT alignment check request message for finishing the alignment check to the SECC; and receiving a second DWPT alignment check response message for finishing the alignment check from the SECC.

According to another aspect of an exemplary embodiment, provided is a charging communication handoff method for electric vehicle charging. The charging communication handoff method includes: receiving, by an electric vehicle communication controller (EVCC) mounted in an electric vehicle, a response message to a handoff request message from a first supply equipment communication controller (SECC) correlated with a first primary assembly transmitting power to an electric vehicle by a dynamic wireless power protocol (D-WPT) while the electric vehicle is in motion; performing, by the EVCC, probing and association in cooperation with a second SECC correlated with a second primary assembly suitable for transmitting power to the electric vehicle by the D-WPT based on the response message to the handoff request message; and when probing and association with the second SECC are successful, transmitting, by the EVCC, a message requesting to terminate the power transfer to the first SECC.

The charging communication handoff method according to an exemplary embodiment may further include: transmitting, by the first SECC, a request message requesting information on adjacent APs or information on at least one SECCs capable of providing a D-WPT service to a first access point (AP) controller managing a coverage of a first access point where the first SECC is located; broadcasting, by the first AP controller, a steering request message including a request for the information on the at least one SECCs capable of providing the D-WPT service; transmitting, by the second AP controller managing a coverage of a second access point where the second SECC is located, a steering response message including information on the second SECC to the first AP controller; and receiving, by the first SECC, a response message including information on the second SECC from the first AP controller.

The charging communication handoff method according to an exemplary embodiment may further include: transmitting, by the first SECC, a neighbor report request message to a first SDP entity related to the first SECC; transmitting, by the first SDP entity, a multiple AP controller initiate request message to a first AP controller managing a coverage of a first access point where the first SDP entity and the first SECC are located; receiving, by the first SDP entity, a multiple AP controller initiate response message from the first AP controller; and receiving, by the first SECC, a neighbor report response message from the first SDP entity.

The operation of performing, by the EVCC, probing and association in cooperation with the second SECC correlated with the second primary assembly may include: transmitting, by the EVCC, a probe request message related to a D-WPT service to the second SECC; receiving, by the EVCC, a probe response message related to the D-WPT service from the second SECC; transmitting, by the EVCC, an association request message related to the D-WPT service to the second SECC; and receiving, by the EVCC, an association response message including information on a success of the D-WPT service from the second SECC.

The charging communication handoff method according to an exemplary embodiment may further include: monitoring, by the EVCC and the first SECC, a power transfer status between the first primary assembly and a secondary assembly; and transmitting, by the EVCC, a handoff request message to the first SECC.

According to an aspect of another exemplary embodiment, provided is an electric vehicle communication controller (EVCC) mounted in an electric vehicle and correlated with a secondary assembly receiving power from a primary assembly.

The EVCC includes a processor configured to receive at least one instruction from a memory and executing the at least one instruction. The processor, when executing the at least one instruction, is configured to: perform an association with a supply equipment communication controller (SECC) correlated with the primary assembly transferring power to the electric vehicle based on compatibility information shared between the EVCC and the SECC; identify the SECC providing a dynamic wireless power protocol (D-WPT) based on an SECC discovery protocol (SDP) related to the SECC; and identify a common protocol applicable between the SECC and the EVCC.

When the processor performs the association with the SECC by executing the at least one instruction, the processor may be further configured to: receive a beacon message broadcast by the SECC as a part of a WLAN scanning process; transmit an association request message to the SECC identified based on the beacon message; and receive an association response message including information indicating a success of the association from the SECC.

When the processor identifies the SECC providing the D-WPT based on the SDP related to the SECC by executing the at least one instruction, the processor may be further configured to: broadcast an SDP request message related to the EVCC; and receive an SDP response message from an SDP entity related to the SECC.

When the processor identifies the common protocol applicable between the SECC and the EVCC by executing the at least one instruction, the processor may be further configured to: transmit a supported application protocol request message to the SDP entity related to the SECC; and receive a supported application protocol response message from the SDP entity.

By executing the at least one instruction, the processor may be further configured to: perform a negotiation for positioning, pairing, and alignment check in cooperation with the SECC; perform a vehicle positioning in cooperation with the SECC; and perform a pairing in cooperation with the SECC.

By executing the at least one instruction, the processor may be further configured to: perform an alignment check in cooperation with the SECC; perform a cable check and precharging and then start a power transfer in cooperation with the SECC; and monitor and control a power transfer process in cooperation with the SECC.

### ADVANTAGEOUS EFFECTS

An exemplary embodiment of the present disclosure provides a charging communication method and apparatus for dynamic wireless power transfer (D-WPT) utilizing a wireless local area network (WLAN) technology. Here, the dynamic wireless power transfer may be understood as a wireless power transfer performed while a vehicle or mobility is in motion.

An exemplary embodiment of the present disclosure provides a process of performing association, pairing, and SECC discovery protocol (SDP) between an electric vehicle communication controller (EVCC) and a supply equipment communication controller (SECC) using the WLAN when the electric vehicle is to be charged by the D-WPT service.

An exemplary embodiment of the present disclosure provides a method of performing a handoff process between SECCs when the electric vehicle is in motion while being charged by the D-WPT service.

An exemplary embodiment of the present disclosure provides a method of performing a handoff process between access points (APs) and SECCs when the electric vehicle is in motion while being charged by the D-WPT service in a multiple-AP environment.

An exemplary embodiment of the present disclosure provides a method of exchanging additional information for providing the D-WPT service taking into account changes in the a driving situation of an electric vehicle when the electric vehicle is being charged by the D-WPT service in a multiple-AP environment

### DESCRIPTION OF DRAWINGS

FIG. 1 is a conceptual diagram illustrating a charging infrastructure for charging electric vehicles by a dynamic wireless power transfer (D-WPT) using parallel lines according to an exemplary embodiment of the present disclosure;
FIG. 2 is a conceptual diagram illustrating a charging infrastructure for charging electric vehicles by the dynamic wireless power transfer (D-WPT) using segmented parallel lines according to an exemplary embodiment of the present disclosure;
FIG. 3 is a conceptual diagram illustrating a charging infrastructure for charging electric vehicles by the dynamic wireless power transfer (D-WPT) using segmented coils according to an exemplary embodiment of the present disclosure;
FIG. 4 is a flowchart illustrating a process of performing a communication setup, a charging communication session, and a charging session for the D-WPT according to an exemplary embodiment of the present disclosure;
FIG. 5 is a flowchart illustrating a process of performing the charging communication session shown in FIG. 4 in detail;
FIG. 6 is a flowchart illustrating a process of performing the charging session shown in FIG. 4 in detail;
FIG. 7 is a conceptual diagram illustrating a use case according to an exemplary embodiment of the present disclosure, in which an electric vehicle starting from a parking spot drives on the D-WPT road without changing lanes and then reaches the parking spot;
FIG. 8 is a conceptual diagram illustrating a protocol for a termination of a charging in the use case of FIG. 7;
FIG. 9 is a conceptual diagram illustrating use cases according to exemplary embodiments of the present disclosure, in which an electric vehicle changes lanes or is getting out of a range of the WLAN on the D-WPT road;
FIG. 10 is a conceptual diagram illustrating a protocol performed in the use cases of FIG. 9 where the electric vehicle changes lanes and/or is getting out of a range of the WLAN;
FIG. 11 is a conceptual diagram illustrating a use case according to an exemplary embodiment of the present disclosure, in which an electric vehicle having driven on the D-WPT road reaches a parking spot supporting an S-WPT service compatible with the D-WPT;
FIG. 12 is a conceptual diagram illustrating a protocol performed when the electric vehicle reaches the parking spot in the use case of FIG. 11;
FIGS. 13 and 14 are conceptual diagrams illustrating a process of changing a primary assembly according to a vehicle movement during a D-WPT service in accordance with an embodiment of the present disclosure;
FIG. 15 is a flowchart illustrating a sequence of protocols for the D-WPT service according to an exemplary embodiment of the present disclosure;
FIG. 16 is a flowchart illustrating a primary assembly change process according to the vehicle movement and a WLAN-based handoff process for the D-WPT service in accordance with an exemplary embodiment of the present disclosure;
FIG. 17 is a flowchart illustrating a part of a process of performing the WPT session after the handoff process shown in FIG. 16;
FIG. 18 is a flowchart illustrating a part of the process of performing the WPT session of FIG. 15;
FIG. 19 is a sequence diagram illustrating compatibility check process, association, SECC discovery, identification, and pairing processes, and a common protocol identification process for the D-WPT service according to an exemplary embodiment of the present disclosure;
FIG. 20 is a sequence diagram illustrating the protocols shown in FIG. 19 in detail;
FIG. 21 is a sequence diagram illustrating protocol negotiation, positioning, and pairing processes for the D-WPT service according to an exemplary embodiment of the present disclosure;
FIG. 22 is a sequence diagram illustrating the protocol shown in FIG. 21 in detail;
FIG. 23 is a sequence diagram illustrating alignment check, cable check, precharging, charging control, and monitoring processes for the D-WPT service according to an exemplary embodiment of the present disclosure;
FIG. 24 is a sequence diagram illustrating the alignment check process shown in FIG. 23 in detail;
FIGS. 25 through 27 are sequence diagrams illustrating SECC and/or AP handoff processes for the D-WPT service when vehicle moves according to an exemplary embodiment of the present disclosure; and
FIG. 28 is a block diagram of a charging communication apparatus for the D-WPT according to an exemplary embodiment of the present disclosure and illustrates a physical configuration of an internal structure of a computing system suitable for implementing a generalized EVCC, SECC, SDP entity, and/or AP controller.

### BEST MODE

In addition to the above objects, another objects and features of the present disclosure will become more apparent through the description of exemplary embodiments with reference to the accompanying drawings.

For a clearer understanding of the features and advantages of the present disclosure, exemplary embodiments of the present disclosure will be described in detail with reference to the accompanied drawings. However, it should be understood that the present disclosure is not limited to particular embodiments disclosed herein but includes all modifications, equivalents, and alternatives falling within the spirit and scope of the present disclosure.

The terminologies including ordinals such as "first" and "second" designated for explaining various components in this specification are used to discriminate a component from the other ones but are not intended to be limiting to a specific component. For example, a second component may be referred to as a first component and, similarly, a first component may also be referred to as a second component without departing from the scope of the present disclosure. As used herein, the term "and/or" may include a presence of one or more of the associated listed items and any and all combinations of the listed items.

In the description of exemplary embodiments of the present disclosure, "at least one of A and B" may mean "at least one of A or B" or "at least one of combinations of one or more of A and B". In addition, in the description of exemplary embodiments of the present disclosure, "one or more of A and B" may mean "one or more of A or B" or "one or more of combinations of one or more of A and B".

When a component is referred to as being "connected" or "coupled" to another component, the component may be directly connected or coupled logically or physically to the other component or indirectly through an object therebetween. Contrarily, when a component is referred to as being "directly connected" or "directly coupled" to another component, it is to be understood that there is no intervening object between the components. Other words used to describe the relationship between elements should be interpreted in a similar fashion.

The terminologies are used herein for the purpose of describing particular exemplary embodiments only and are not intended to limit the present disclosure. The singular forms include plural referents as well unless the context clearly dictates otherwise. Also, the expressions "comprises," "includes," "constructed," "configured" are used to refer a presence of a combination of stated features, numbers, processing steps, operations, elements, or components, but are not intended to preclude a presence or addition of another feature, number, processing step, operation, element, or component.

Unless defined otherwise, all terms used herein, including technical or scientific terms, have the same meaning as commonly understood by those of ordinary skill in the art to which the present disclosure pertains. Terms such as those defined in a commonly used dictionary should be interpreted as having meanings consistent with their meanings in the context of related literatures and will not be interpreted as having ideal or excessively formal meanings unless explicitly defined in the present application.

Meanwhile, one or more conventional components may be included in a configuration of the present disclosure if necessary, and such components will be described herein to an extent that it does not obscure the technical idea and concept of the present disclosure. If the description of the conventional components may obscure the technical idea and concept of the present disclosure, however, detailed description of such components may be omitted for simplicity.

For example, conventional technologies known to public before the filing of the present disclosure may be utilized in performing a setup, an association, a pairing, a localization, a positioning, and a docking/undocking control before charging an electric vehicle or in transmitting or receiving information required to perform the processes by applying mobile communication technologies such as Wi-Fi or 5G in a single-layer. At least some of the conventional technologies may be applied as a base technology for implementing the present disclosure.

However, the present disclosure is not intended to claim rights to these known technologies, and some of the conventional technologies may be included in the description of exemplary embodiments to enable to those skilled in the art to implement the exemplary embodiments without deviating from a scope of a technical concept of the exemplary embodiments.

Terms used in the present disclosure are defined as follows.

"Electric Vehicle (EV)": An automobile, as defined in 49 CFR 523.3, intended for highway use, powered by an electric motor that draws current from an on-vehicle energy storage device, such as a battery, which is rechargeable from an off-vehicle source, such as residential or public electric service or an on-vehicle fuel powered generator.

The EV may include an electric vehicle, an electric automobile, an electric road vehicle (ERV), a plug-in vehicle (PV), an electromotive vehicle (xEV), etc., and the xEV may be classified into a plug-in all-electric vehicle (BEV), a battery electric vehicle, a plug-in electric vehicle (PEV), a hybrid electric vehicle (HEV), a hybrid plug-in electric vehicle (HPEV), a plug-in hybrid electric vehicle (PHEV), etc.

"Plug-in Electric Vehicle (PEV)": An Electric Vehicle that recharges the on-vehicle primary battery by connecting to the power grid.

"Plug-in vehicle (PV)": An electric vehicle rechargeable via wireless charging from an electric vehicle supply equipment (EVSE) without using a physical plug or a physical socket.

"Heavy duty vehicle (H.D. Vehicle)": Any four-or more wheeled vehicle as defined in 49 CFR 523.6 or 49 CFR 37.3 (bus).

"Light duty plug-in electric vehicle": A three or four-wheeled vehicle propelled by an electric motor drawing current from a rechargeable storage battery or other energy devices for use primarily on public streets, roads and highways and rated at less than 4,545 kg gross vehicle weight.

"Wireless power charging system (WCS)": A system for wireless power transfer and control of interactions including operations for an alignment and communications between a supply device (or ground assembly) and an EV device (or vehicle assembly).

"Wireless power transfer (WPT)": A transfer of electric power between a power source such as a utility, the power grid, an energy storage device, a fuel cell generator and the EV through a contactless channel such as electromagnetic induction and resonance.

"Utility": A set of systems which supply electrical energy and include a customer information system (CIS), an advanced metering infrastructure (AMI), rates and revenue system, etc. The utility may provide an EV with energy through rates table and discrete events. Also, the utility may provide information related to certification on EVs, interval of power consumption measurements, and tariff.

"Smart charging": A system in which EVSE and/or EV (including the PEV, or PHEV) communicate with power grid to optimize charging ratio or discharging ratio of EV by reflecting capacity of the power grid or expense of use.

"Automatic charging": A procedure in which inductive charging is automatically performed after a vehicle is located in a proper position corresponding to a primary charger assembly which may transfer power by a conductive or inductive charging. The automatic charging may be performed after obtaining necessary authentication and right.

"Interoperability": A state in which components of a system interwork with corresponding components of the system to perform operations aimed by the system. Additionally, information interoperability may refer to capability that two or more networks, systems, devices, applications, or components may efficiently share and easily use information without causing inconvenience to users.

"Inductive charging system": A system transferring energy from a power source to an EV via a two-part gapped core transformer in which the two halves of the transformer, i.e., primary and secondary coils, are physically separated from one another. In the present disclosure, the inductive charging system may correspond to an EV power transfer system.

"Inductive coupler": A transformer formed by the primary coil in the primary device or a ground assembly (GA) and the secondary coil in the secondary device or a vehicle assembly (VA) that allows power to be transferred through electric isolation.

"Inductive coupling": A magnetic coupling between two coils. One of the two coils may refer to a primary coil or GA coil, and the other one of the two coils may refer to a secondary coil or vehicle assembly VA coil.

"Supply Power Circuit (SPC) or "Ground assembly (GA)": An assembly disposed on a primary device or the ground assembly or an infrastructure side including the primary coil (or GA coil) and other components. The other components may include at least one part to control the impedance and resonant frequency, a ferrite enforcing the magnetic path, and electromagnetic shielding materials. For example, the SPC or GA may include a power/frequency conversion unit and a SPC controller (or GA controller) necessary to function as a power source of a wireless power charging system, a wiring from the grid, and wirings between each unit, filtering circuits, and a housing.

"EV power circuit (EVPC)" or "Vehicle assembly (VA)": An assembly mounted in the vehicle including the secondary coil (or VA Coil) and other components. The other components may include at least one part to control the impedance and resonant frequency, a ferrite enforcing the magnetic path, and electromagnetic shielding materials. For example, the EVPC or VA may include a power/frequency conversion unit and a EVPC controller (or VA controller) necessary to as the vehicle part of a wireless power charging system, wiring to the vehicle batteries, and wirings between each unit, filtering circuits, and a housing.

The SPC may be referred to as or identified by the ground assembly (GA) or the like. Similarly, the EVPC may be referred to as or identified by the vehicle assembly (VA) or the like.

The GA may be referred to as the primary device, or the like, and the VA may be referred to as the EV device, the secondary device, or the like.

The GA may be referred to as the supply device, a power supply side device, or the like, and the VA may be referred to as the EV device, an EV side device, or the like.

"Primary device": An apparatus providing the contactless coupling to the secondary device. In other words, the primary device may be an apparatus external to an EV. When the EV is receiving power, the primary device may operate as the source of the power to be transferred. The primary device may include the housing and all covers.

"Secondary device": An apparatus mounted in the EV providing the contactless coupling to the primary device. In other words, the secondary device may be provided within the EV. When the EV is receiving power, the secondary device may transfer the power from the primary device to the EV. The secondary device may include the housing and all covers.

"Supply Power Electronics" indicates a portion of the SPC or GA regulating an output power level of the primary coil (or GA Coil) based on information from the vehicle. "EV Power Electronics" indicates a portion of the EVPC or VA monitoring specific on-vehicle parameters during the charging and initiating communications with the EVPC or GA to facilitate the adjustment of the output power level.

The Supply Power Electronics may be referred to as GA electronics, a GA controller, or a primary device communication controller (PDCC), and the EV Power Electronics may be referred to as VA electronics, a VA controller, or an electric vehicle communication controller (EVCC).

"Magnetic gap": A vertical distance between the plane of the higher of the top of the litz wire or the top of the magnetic material in the primary coil/GA Coil to the plane of the lower of the bottom of the litz wire or the magnetic material in the secondary coil/VA Coil when aligned.

"Ambient temperature": A ground-level temperature of the air measured at a subsystem under consideration and not in direct sun light.

"Vehicle ground clearance": A vertical distance between a ground surface and a lowest part of a vehicle floor pan.

"Vehicle magnetic ground clearance": A vertical distance between the plane of the lower of the bottom of the litz wire or the magnetic material in the secondary coil or VA Coil mounted in the vehicle to the ground surface.

"Secondary coil surface distance" or "VA coil magnetic surface distance": A distance between a plane of a nearest magnetic or conducting component surface to a lower external surface of the secondary coil or VA coil when mounted. Such a distance may include any protective coverings and additional items which may be packaged in the secondary coil or VA coil enclosure.

The secondary coil may be referred to as the VA coil, a vehicle coil, or a receiver coil. Similarly, the primary coil may be referred to as the GA coil or a transmit coil.

"Exposed conductive component": A conductive component of electrical equipment (e.g., an electric vehicle) that may be touched, and is not normally energized but may become energized when a fault occurs.

"Hazardous live component": A live component which, under certain conditions, may generate a harmful electric shock.

"Live component": Any conductor or conductive component intended to be electrically energized in normal use.

"Direct contact": A contact of a person with a live component. See IEC 61140 standard.

"Indirect contact": A contact of a person with exposed, conductive, and energized components made live by an insulation failure. See IEC 61140 standard.

"Alignment": A process of finding a relative position of the secondary device with respect to the primary device and/or a relative position of the primary device with respect to the secondary device for an efficient power transfer. In the present disclosure, the alignment may be directed to the alignment in the wireless power transfer system but may not be limited thereto.

"Pairing": A process of associating the vehicle (EV) with a single dedicated supply device (primary device) disposed such that the power transfer may occur. The pairing may include a process of associating the EVPC or VA controller with the SPC or GA controller of the charging spot.

The correlation or association process may include a process of establishing a relationship between two peer communication entities.

"Command and control communications": Communications for exchanging information required for starting, controlling, and ending the wireless power transfer process between an electric vehicle supply equipment and an electric vehicle.

"High-level communication (HLC)": A digital communication capable of handling all information not covered by the command and control communications. The data link of the HLC may use a power line communication (PLC) but is not limited thereto.

"Low-power excitation (LPE)": A technique of activating the supply device (or primary device) for the fine positioning and pairing so that the EV may detect the supply device, and vice versa.

"Service set identifier (SSID)": A unique identifier including 32-characters attached to a header of a packet transmitted on a wireless LAN. The SSID identifies the basic service set (BSS) to which the wireless device attempts to connect. The SSID distinguishes multiple wireless LANs. Therefore, all access points (APs) and all terminal/station devices that want to use a specific wireless LAN may use the same SSID. Devices that do not use a unique SSID are not able to join the BSS. Because the SSID is shown as plain text, the SSID may not provide any security features to the network.

"Extended service set identifier (ESSID)": A name of the network to which one desires to connect. ESSID is similar to SSID but a more extended concept.

"Basic service set identifier (BSSID)": BSSID including 48bits is used to distinguish a specific BSS. With an infrastructure BSS network, the BSSID may be configured for medium access control (MAC) of the AP equipment. For an independent BSS or Ad-hoc network, the BSSID may be generated with any value.

The charging station may include at least one GA and at least one GA controller configured to manage the at least one GA. The GA may include at least one wireless communication device. The charging station may refer to a place or location including at least one GA, which is provided in home, office, public place, road, parking area, etc.

In the present specification, "association" may be used as a term representing a procedure for establishing wireless communication between the electric vehicle communication controller (EVCC) and the supply equipment communication controller (SECC) controlling the charging infrastructure.

"Smart grid": A system implemented in which power plants, power generation units, and energy storage systems are connected in an intelligent manner through network facilities so as to exchange messages based on information and communication technologies.

"Charging station": A facility including one or more EVSEs, smart meters, and other technical equipment required to charge an EV.

"Electric Vehicle Supply Equipment (EVSE)": A device forming a part of the charging station that supplies energy to the electric vehicle via an outlet and being connected to a smart meter to measure an amount of transferred energy.

"Charge Point Operator (CPO)": A company or organization having an authority over the location of the charging station to allow a physical access to the charging station; or a communication node or entity managing the charging station and authorizing and controlling a charging process that takes place at each individual EVSE using information and communication technologies.

"Mobility Operator (MO)": A legal entity establishing a contractual relationship with an end user or a business entity as a legal basis for an authorization and a payment for the charging at the charging station.

E-Mobility Provider (EMP), E-Mobility Service Provider (EMSP), and Mobility Service Provider (MSP) may be used with similar meanings to the mobility operator.

"Plug-and-Charge (PnC)": A process in which the authentication, authorization, load control, and payment are automatically performed without any additional user interaction when a user simply plugs the electric vehicle into the EVSE. Alternatively, the PnC may refer to an identification and authorization mode for such an automatic process. The PnC may be performed by applying X.509 certificates and transmitting and verifying a signature.

"Public Key Infrastructure (PKI)": A system for creating, storing, redistributing, and revoking digital signatures that are used to verify that a specific public key belongs to a specific person or entity.

"External Identification Means (EIM)": Any external means by which a driver can authenticate and authorize himself or herself for a charging session at the charging station. Examples include a cash payment, a prepaid card, a credit card, a debit card, an NFC, a RFID, and an SMS. The EIM may form two typical authentication modes together with the PnC.

"Sales tariff": A function of providing price-related information over time. The sales tariff may refer to an input provided by the mobility operator to enable the EVCC side to calculate a charging schedule based on the sales tariff. The sales tariff may be a concept intended to provide incentives to electric vehicles that charge within a specific time slot for a preferred amount of electricity. A use case related to the sales tariff may be information on the electricity price provided by the mobility operator that authenticates the charging session based on a valid contract, in which case the contract may be authenticated by the driver or a car sharing operator to which the vehicle belongs by a contract certificate installed in the electric vehicle.

Additionally, the term "sales tariff" used herein may refer to a concept intended to encourage the use of renewable energy such as electric energy acquired by solar panels or wind turbines by providing incentives to electric vehicles charged during predictable time slots by the renewable energy. In some cases, the sales tariff may include not only the information on the electricity price but also the time slot associated with the price information.

"Secondary actor": An entity other than the EVCC or the SECC involved in the charging process. The secondary actor may be involved in the charging process by providing information related to the charging process. Examples of the secondary actor may include a charge point operator (CPO) and the mobility operator (MO).

"E-Mobility Account Identifier (EMAID)": A single contractual certificate issued for each legal contract concluded between the mobility operator and a customer for the electric vehicle charging. The EMAID may allow personal data to be pseudonymized and may be valid only for a limited time, e.g., the lifetime of the legal contract. Unlike the Vehicle Identification Number (VIN), the EMAID may not allow for a long-term evaluation of customer or vehicle data. The EMAID may be used as a temporary identifier that may be assigned using different authentication media for each temporary or short-term contract concluded for a family vehicle or a shared vehicle. A person may have a separate EMAID for each of several contracts with which the person is involved, so that the EMAIDs may be used for purposes other than personal identification information.

A term "vehicle-to-grid (V2G) communication" used herein is regulated in the ISO 15118 standard and can be designed to correspond to the Open Systems Interconnection (OSI) 7 layers. The OSI may be 'a conceptual model for standardizing communication functions of a communication or computing system regardless of an internal structure and technology involved.'

The ISO 15118 standard is characterized in that it is intended to establish and implement the charging and payment process for the electric vehicle and may adopt and utilize various information and communication technologies for this objective. Since the objective of the ISO 15118 standard is to establish the charging and payment process for the electric vehicle although the standard is related to the information and communication technology elements mapped to the OSI 7 layers, the special features of the application may be primarily addressed.

The V2G communication interface specified in the ISO 15118 standard may include digital, IP-based protocols. The communications between the EV and the EVSE and the communications between the EVCC and the SECC may be included in the V2G communication interface specified in the ISO 15118 standard.

"Vendor specific element (VSE)" may refer to a data format that contains information on a type of an EVSE available at a current location in ISO 15118-based communications.

Exemplary embodiments of the present disclosure will now be described in detail with reference to the accompanying drawings. In the drawings, the same components may be designated by the same reference numerals to facilitate overall understanding of the disclosure, and duplicate descriptions thereof will be omitted for simplicity.

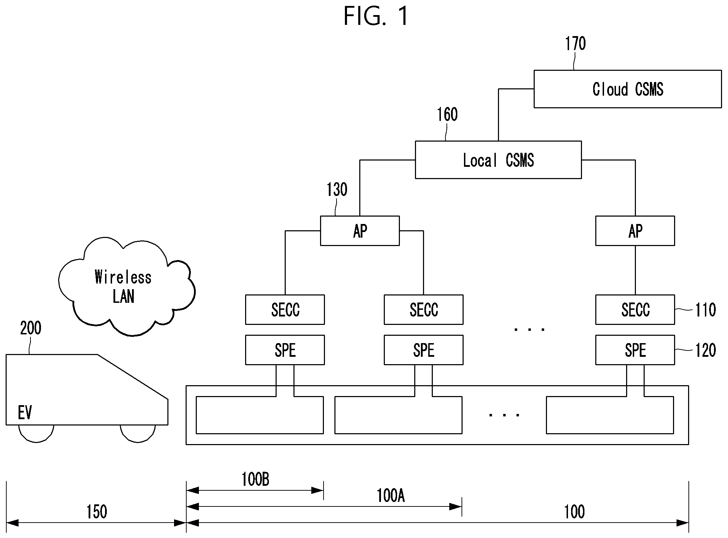

Hereinbelow, exemplary embodiments of the present disclosure are described in detail with reference to FIGS. 1-25.

FIG. 1 is a conceptual diagram illustrating a charging infrastructure for charging electric vehicles by a dynamic wireless power transfer (D-WPT) using parallel lines according to an exemplary embodiment of the present disclosure.

Referring to FIG. 1, a D-WPT road 100 capable of providing a D-WPT service to an electric vehicle 200 includes a plurality of parallel lines 100B. Each of the parallel lines 100B illustrated in FIG. 1, which is an element of the D-WPT road 100 buried in or arranged/installed on a section of the D-WPT road 100, may be an infrastructure component capable of wirelessly transmitting electric power to the electric vehicle 200 in the section of the D-WPT road 100.

A range of a wireless local area network (WLAN) 100A may typically be less than 100 meters (m). Referring to FIG. 1, a length of each parallel line 100B may be set to 50 m or smaller. Each parallel line 100B within the range of the WLAN 100A may be connected to a corresponding supply power electronics (SPE) 120 to receive the electric power, and a supply equipment communication controller (SECC) 110 in charge of the SPE 120 may communicate with an electric vehicle communication controller (EVCC) in the electric vehicle 200 for the power transfer between the SPE 120 and the electric vehicle 200. In the exemplary embodiment shown in FIG. 1, an access point AP 130 may be disposed in within the range of the WLAN 100A, and one SPE 120 and one SECC 110 may be arranged for each parallel line 100B.

In order to implement the D-WPT road or D-WPT supply device 100 all along the road, multiple APs may be deployed and multiple SECC Discovery Protocols (SDPs) may be assigned to each AP 130 as shown in FIG. 1. The SDPs may be assigned to respective SECCs 110, for example.

In an alternative embodiment, however, the parallel line 100B may be implemented to be longer than 50 m. In such a case, multiple APs may be deployed and one SDP may be assigned to each AP 130 so as to enable to implement the D-WPT road or device 100 all along the road.

The electric vehicle 200 may communicate with the SECC 110 via the WLAN, e.g., Wi-Fi. When the electric vehicle 200 enters the D-WPT road 100 from a normal road 150, the D-WPT service may be initiated based on communications and a pairing between the electric vehicle 200 and the SECC 110.

The D-WPT infrastructure may be connected to the multiple APs 130, and a security of the D-WPT infrastructure may be managed by a local cyber security management system (CSMS) 160 in charge of the multiple APs 130 and a cloud CSMS 170. Communications between the Local CSMS 160 and the cloud CSMS 170 may be implemented using cellular vehicle-to-everything (C-V2X) schemes.

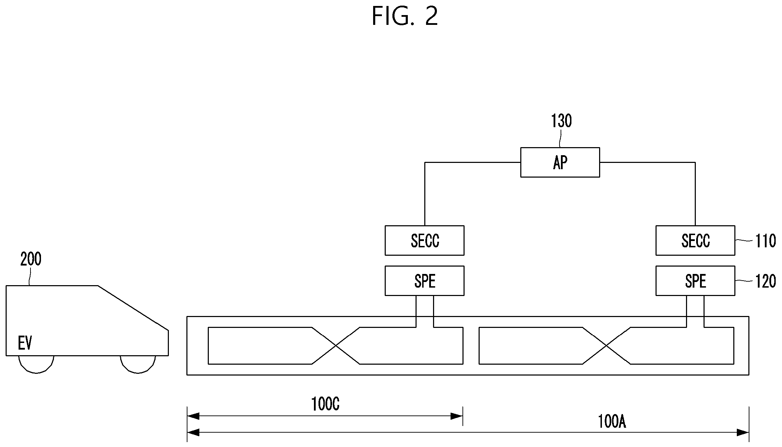

FIG. 2 is a conceptual diagram illustrating a charging infrastructure for charging electric vehicles by the dynamic wireless power transfer (D-WPT) using segmented parallel lines according to an exemplary embodiment of the present disclosure.

A D-WPT infrastructure employing the segmented parallel lines 100C is illustrated in FIG. 2. Each segmented parallel line 100C illustrated in FIG. 2, which is an element of the D-WPT road 100, may be an infrastructure component capable of wirelessly transmitting the electric power to the electric vehicle 200 in a section of the D-WPT road 100.

Referring to FIG. 2, the length of the segmented parallel line 100C may be set to 50 m or smaller. Each segmented parallel line 100C within the range of the WLAN 100A may be connected to a corresponding one of the SPEs 120 to receive the electric power and may interact with the electric vehicle 200 through the communications of the SECC 110. In the exemplary embodiment shown in FIG. 2, a single access point AP 130 may be disposed in the range of the WLAN 100A, and one SPE 120 and one SECC 110 may be arranged for each segmented parallel line 100C.

In order implement the D-WPT road or D-WPT supply device 100 all along the road, multiple APs may be deployed and multiple SECC Discovery Protocols (SDPs) may be assigned to each AP 130 as shown in FIG. 2. The SDPs may be assigned to respective SECCs 110, for example.

In an alternative embodiment, however, the segmented parallel line 100C may be implemented to be longer than 50 m. In such a case, multiple APs may be deployed and one SDP may be assigned to each AP 130 to enable to implement the D-WPT road or device 100 all along the road.

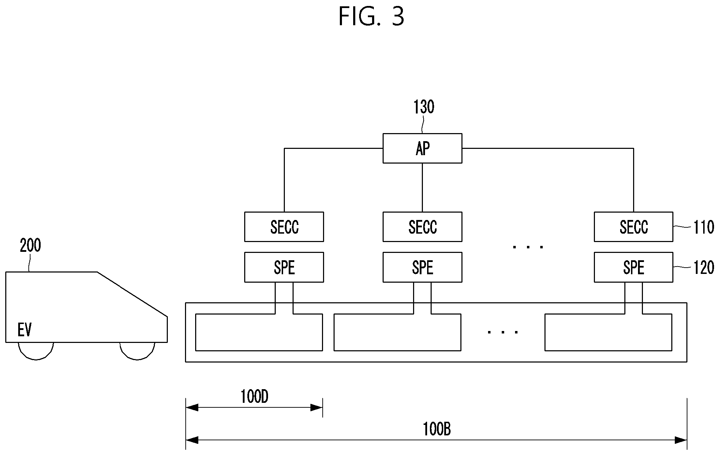

FIG. 3 is a conceptual diagram illustrating a charging infrastructure for charging electric vehicles by the dynamic wireless power transfer (D-WPT) using segmented coils according to an exemplary embodiment of the present disclosure.

A segmented coil 100D illustrated in FIG. 3 may be a sub-component of the D-WPT infrastructure that supplies the electric power to the electric vehicle 200 entering a certain area. Since a length of each section of the segmented coil 100D is generally smaller than the range of the WLAN 100A, multiple APs may be deployed and multiple SECC Discovery Protocols (SDPs) may be assigned to each AP 130 in order to implement the D-WPT road or device 100 all along the road.

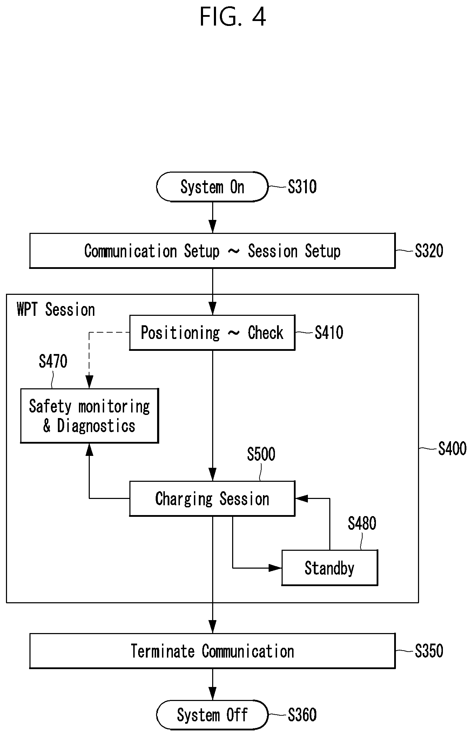

FIG. 4 is a flowchart illustrating a process of a communication setup, a charging communication session, and a charging session for the dynamic wireless power transfer (D-WPT) according to an exemplary embodiment of the present disclosure.

In the description below, all the operations performed between the EVCC and at least one SECC may be performed by logical operations of at least one of the EVCC and/or the at least one SECC or by a cooperation of the EVCC and the at least one SECC. The localization between the electric vehicle 200 and the D-WPT infrastructure, the positioning of the electric vehicle 200, and a determination of whether the electric vehicles 200 is outside the range of the D-WPT infrastructure, and so on may be performed by the EVCC and/or the at least one SECC, and results of the measurement, recognition, or determination may be shared by the EVCC and/or the at least one SECC.

Referring to FIG. 4, a charging communication method for electric vehicle charging according to an exemplary embodiment of the present disclosure includes operations of performing the communication setup and session setup for the wireless power transfer between the at least one SECC and the EVCC (S320); performing the charging communication session for the dynamic wireless power transfer (D-WPT) between the at least one SECC and the EVCC (S400, S410); and performing the charging session by the dynamic wireless power transfer between the at least one SECC and the EVCC (S500).

The operation S320 of performing the communication setup and the session setup may be performed between the EVCC and the at least one SECC capable of communicating with the EVCC through the wireless local area network (WLAN).

The operations of performing the charging communication session for the D-WPT (S400, S410) may include an operation of determining (identifying or detecting), between the EVCC and a first SECC from among the at least one SECC capable of communicating with the EVCC via the WLAN, whether the first SECC capable of communicating with the EVCC via the WLAN is a SECC installed on the D-WPT road and capable of providing the D-WPT service.

When the system including the SECC and EVCC are turned on (S310), the communication setup and the session setup between the at least one SECC and the EVCC are performed (S320).

The charging communication session S400 performed between the at least one SECC and the EVCC may include a positioning and checking operation S410. The operation S410 may optionally activate a safety monitoring and diagnosis operation S470. The operation S470 may be activated when the charging session S500 is performed.

If a certain condition is satisfied during the charging session S500, the process may proceed to a standby state S480. If a certain condition is satisfied in the standby state S480, the process may return to the charging session S500.

When the charging session S500 is completed, the communication between the at least one SECC and the EVCC may be terminated (S350). Afterwards, the system including the at least one SECC and EVCC may be turned off (S360).

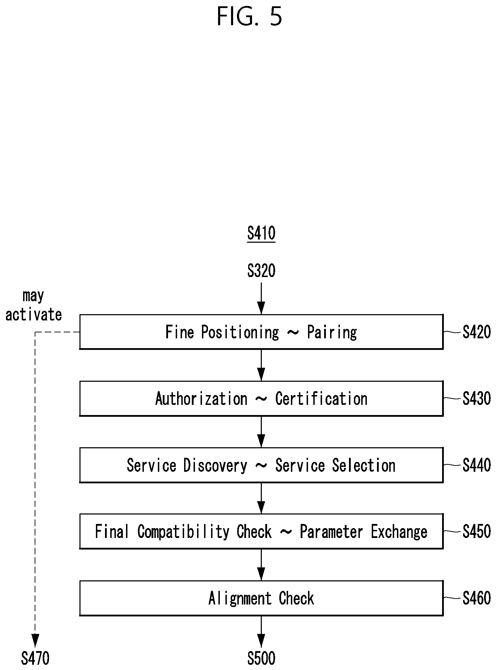

FIG. 5 is a flowchart illustrating, in detail, a process of performing the charging communication session shown in FIG. 4 according to an exemplary embodiment of the present disclosure.

Referring to FIG. 5, the operation S410 may include a fine positioning and pairing operation S420 performed after the operation S320. Depending on a result of the operation S420, the safety monitoring and diagnosis operation S470 may optionally be activated.

After the operation S420, an authorization and certification processing operation S430 may be performed.

After the operation S430, a service discovery and service selection operation S440 may be performed.

After the operation S440, a final compatibility check and parameter exchange operation S450 may be performed.

After the operation S450, an alignment check operation S460 may be performed.

After the operation S460, the charging session S500 may be performed.

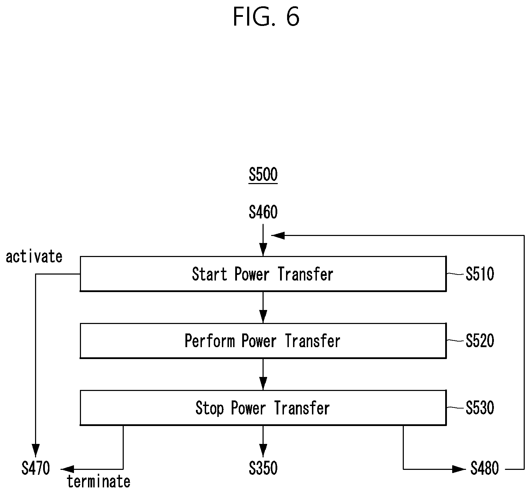

FIG. 6 is a flowchart illustrating an embodiment of the charging session shown in FIG. 4 in detail.

Referring to FIG. 6, the charging session S500 may include a power transfer start operation S510, a power transfer performing operation S520, and a power transfer stop operation S530. The power transfer start operation S510 may be performed after the alignment check operation S460 and may activate the safety monitoring and diagnosis operation S470. Meanwhile, the power transfer stop operation S530 may terminate the safety monitoring and diagnosis operation S470.

If a certain condition is satisfied after the power transfer stop operation S530, an operation of terminating the communication connection may be performed (S350). If a certain condition is satisfied (e.g., a target charging amount or a target state of charge (SoC) is achieved) after the power transfer stop operation S530, the process may proceed to the standby state S480. Afterwards, when a certain condition is satisfied (e.g., the state of charge or a charging ratio falls below a reference value) in the standby state S480, the process may return to the power transfer start operation S510.

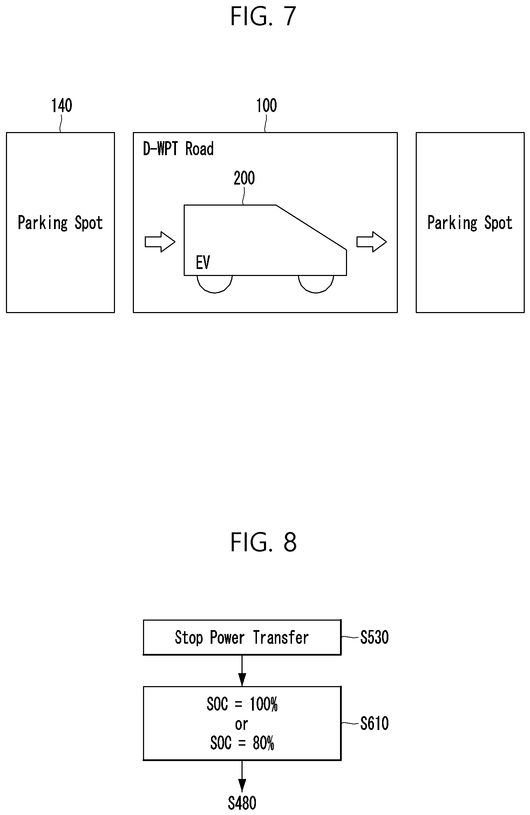

FIG. 7 is a conceptual diagram illustrating a use case according to an exemplary embodiment of the present disclosure, in which an electric vehicle starting from a parking spot drives on the D-WPT road without changing lanes and then reaches the parking spot.

Referring to FIG. 7, the electric vehicle 200 may leave a parking spot and may be charged while driving on the D-WPT road 100 without changing lanes on the D-WPT road 100, and may reach the parking spot 140.

FIG. 8 is a conceptual diagram illustrating a protocol for a termination of the charging in the use case of FIG. 7.

Referring to FIG. 8, a charging communication method for electric vehicle charging according to an exemplary embodiment of the present disclosure may further include an operation of terminating the charging session (S480) when the state of charge (SOC) of the electric vehicle reaches a predetermined reference value (S610) through the D-WPT between the SECC and the EVCC.

The value of the target state of charge, i.e., 80% or 100%, may be just an example in an exemplary embodiment of the present disclosure, and the present disclosure is not limited thereto.

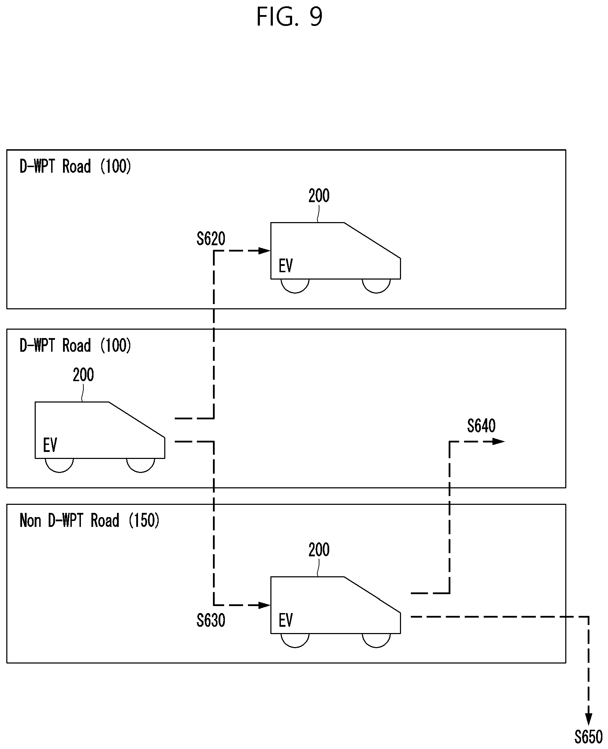

FIG. 9 is a conceptual diagram illustrating use cases according to exemplary embodiments of the present disclosure, in which an electric vehicle changes lanes or is getting out of a range of the WLAN on the D-WPT road.

First, FIG. 9 shows a use case (S620) where the electric vehicle driving on the D-WPT road 100 changes lanes to another lane on the D-WPT road 100. As described in detail below, the protocols performed in the conceptual use case S620 may differ depending on whether the lanes before and after the lane change within the D-WPT road 100 allow the same service as each other and/or provide a compatibility (for example, please refer to S620, S630, S640, or S650).

In addition, FIG. 9 shows another use case (S630) where the electric vehicle changing lanes from the D-WPT road 100 to a non-D-WPT road 150, i.e., a normal road.

An example that the electric vehicle changes the lane back to a lane on the D-WPT road 100 after the lane change from the D-WPT road 100 to the non-D-WPT road 150 is indicated by a use case (S640).

An example that the electric vehicle is getting out of the range of the WLAN after the lane change from the D-WPT road 100 to the non-D-WPT road 150 is indicated by a use case (S650).

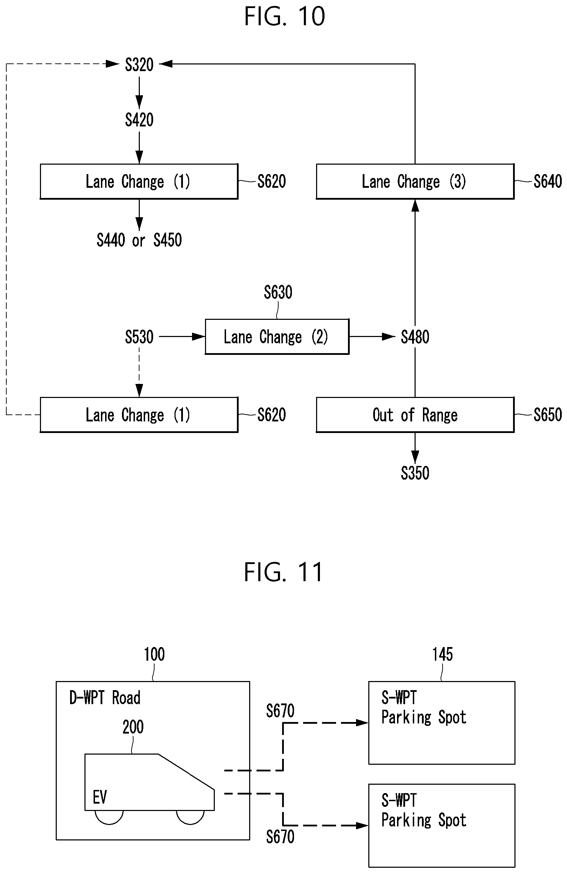

FIG. 10 is a conceptual diagram illustrating a protocol performed in the use cases of FIG. 9 where the electric vehicle changes lanes and/or is getting out of a range of the WLAN.

Referring to FIG. 10, a charging communication method for electric vehicle charging according to an exemplary embodiment of the present disclosure may further include a protocol for stopping the power transfer (S530) and proceeding to the standby state (S480) when at least one of the at least one SECC and/or the EVCC determines (identifies or detects) an event S630 that the electric vehicle changed lanes from a lane on a D-WPT road to a non-D-WPT road.

The charging communication method for electric vehicle charging according to an exemplary embodiment of the present disclosure may further include a protocol for proceeding to an operation of stopping the charging communication session and terminating communication (S350) when at least one of the at least one SECC (for example, at least one SECC associated with a lane before lane changing S630 and/or S650) and/or the EVCC determines (identifies or detects), in the standby state S480, an out-of-range event S650, i.e., an event that the electric vehicle moved out of the range of the WLAN.

According to the charging communication method for electric vehicle charging in accordance with an exemplary embodiment of the present disclosure, when at least one of the at least one SECC (for example, at least one SECC associated with a lane before S630 and/or a lane after a returning event S640) and/or the EVCC determines (identifies or detects), in the standby state S480, the event S640 that the electric vehicle returned to a lane on the D-WPT road, the session setup operation S320 between the EVCC and the at least one SECC associated with a lane after returning S640 on the D-WPT road to which the electric vehicle returned may be performed again.

In the operation of performing the charging communication session, the compatibility check and parameter exchange operation S450 may be performed again when at least one of the at least one SECC (for example, associated with a second lane after a lane changing event S620) and/or the EVCC determines (identifies or detects), based on the results of the positioning and the pairing, the event S620 that the electric vehicle changed lanes from a first lane on the D-WPT road to the second lane on the D-WPT road providing the same service as that available in the previous first lane.

In the operation of performing the charging communication session, the service discovery and service selection operation S440 may be performed again when at least one of the at least one SECC (for example, associated with a second lane after lane changing S620) and/or the EVCC determines (identifies or detects), based on the results of the positioning and the pairing, an event S620 that the electric vehicle changed lanes from a first lane on the D-WPT road to the second lane on the D-WPT road providing a service different from the service available in the previous first lane. For example, a situation can be considered in that a first service provider or a first service protocol associated with the first lane/first SECC is different from a second service provider or a second service protocol associated with the second lane/second SECC.

According to the charging communication method for electric vehicle charging in accordance with an exemplary embodiment of the present disclosure, when at least one of the at least one SECC (for example, associated with a second lane after lane changing S620) and/or the EVCC determines (identifies or detects) an event S620 that the electric vehicle changed lanes from a first lane on the D-WPT road to the second lane on the D-WPT road providing the service different from the service available in the previous first lane requiring a new compatibility check or a new parameter exchange S450, the communication setup and session setup operation S320 for the wireless power transfer may be performed again between the EVCC and a second SECC on the second lane in the state that the charging session is stopped (S530).

FIG. 11 is a conceptual diagram illustrating a use case according to an exemplary embodiment of the present disclosure, in which an electric vehicle having driven on the D-WPT road reaches a parking spot supporting an S-WPT service compatible with the D-WPT.

An example that an electric vehicle 200 having driven on the D-WPT road 100 reaches a parking spot 145 supporting the S-WPT service is illustrated in FIG. 11 as a use case S670.

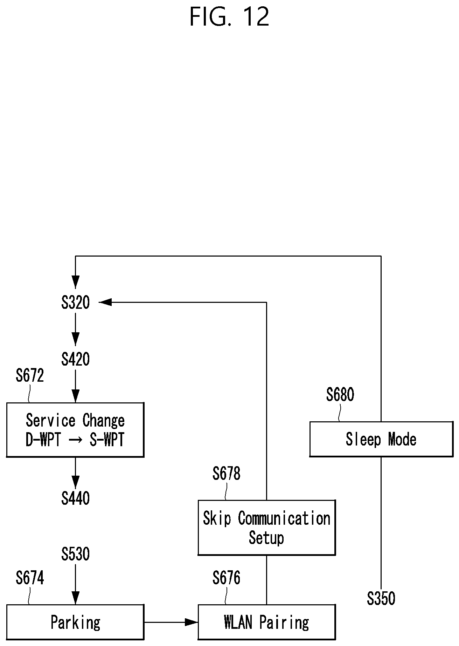

FIG. 12 is a conceptual diagram illustrating a protocol performed when the electric vehicle reaches the parking spot in the use case of FIG. 11.

Referring to FIG. 12, according to the charging communication method for electric vehicle charging in accordance with an exemplary embodiment of the present disclosure, when at least one of the at least one SECC and/or the EVCC determines (identifies or detects) an event S670 that the electric vehicle enters a parking spot 145 providing a static wireless power transfer (S-WPT) service from a lane on the D-WPT road 100, the electric vehicle may perform a parking (S674) in the state that the charging session is stopped (S530). The charging communication method for electric vehicle charging according to an exemplary embodiment of the present disclosure may further include a protocol for performing a pairing process (S676) between the EVCC and a third SECC on the parking spot 145 through the WLAN after the operation S674; and performing a session setup (S320) between the EVCC and the third SECC on the parking spot 145 after the pairing process S676.

At this time, when transitioning to the session setup operation S320 after the pairing operation S676, the communication setup may be skipped (S678).

Meanwhile, when the electric vehicle leaves the D-WPT road 100, the charging session S500 may be terminated (S530), and the process may proceed from the state that the communication between the SECC and the EVCC is terminated (S350) to the communication setup and session setup operation (S320) for the S-WPT service in the parking spot 145 via a temporary state of a sleep mode S680.

According to the embodiments of FIGS. 1-12 and the embodiments described below, in the operation of performing the charging communication session for the dynamic wireless power transfer between the SECC and the EVCC (S400, S410), it may be indicated that the D-WPT service is supported by the at least one SECC by means of a message including D-WPT information as additional information that is a part of a vendor specific element (VSE) in a frame body.

A MAC header and a frame body in a message that may be employed in the charging communication process for the D-WPT service according to an exemplary embodiment of the present disclosure may be proposed.

Following the MAC header, a frame body of 0-2320 bytes may be provided. Exemplary embodiments of the present disclosure may include management frames describing specific details allowing to identify the D-WPT service in the VSE within the frame body.

Frame bodies and VSEs in the message format that may be employed in the charging communication process for the D-WPT service according to embodiments of the present disclosure may be proposed.

In an exemplary embodiment, the VSE for the SECC may be included in the frame body of a beacon frame or the frame body of a probe response frame.

In an exemplary embodiment, the VSE for the EVCC may be included in the frame body of an association request frame.

In an exemplary embodiment, the VSE for the EVCC may be included in the frame body of a re-association request frame.

An example of the VSE for the SECC may include a lower bit for indicating the WPT in an energy transfer type (ETT) field. In addition, the VSE may further include the additional information of 0-238 bits.

An example of the VSE for the EVCC may include a lower bit for indicating the WPT in an energy transfer type (ETT) field. In addition, the VSE may further include the additional information of 0-238 bits.

The additional information within the VSE in the message that may be employed in the charging communication process for the D-WPT service according to an exemplary embodiment of the present disclosure may be proposed.

According to an exemplary embodiment of the present disclosure, for example, fourth through sixth data for a parameter 'Z' and fifth through ninth data for a parameter 'P' for the energy transfer type 'WPT' in the additional information may be proposed to be used as the D-WPT related information.

A change to a service discovery protocol (SDP) request message that may be employed in the charging communication process for the D-WPT service according to an exemplary embodiment of the present disclosure may be proposed. In the present description, the term SDP may refer to a service discovery protocol or an SECC discovery protocol.

An exemplary embodiment of the present disclosure may provide a message structure including the VSE that may be employed in the charging communication process for the D-WPT service.

According to an exemplary embodiment of the present disclosure, a message structure for a fine positioning setup request sequence in the D-WPT system may be used. In particular, additional information allowing to identify the D-WPT system may be added in VendorSpecificDataContainer and LF_SystemSetupData fields containing the VSE.

Exemplary embodiments of the present disclosure described above enable to provide a charging communication method and device for the dynamic wireless power transfer (D-WPT) using the wireless local area network (WLAN).

Exemplary embodiments of the present disclosure enable to provide new vendor specific element (VSE) additional information parameters representing the D-WPT and entities belonging to the D-WPT.

Exemplary embodiments of the present disclosure provide a charging procedure and use cases using the WLAN when charging an electric vehicle by the D-WPT.

Exemplary embodiments of the present disclosure enable to define information to be exchanged between the D-WPT device and the electric vehicle when the D-WPT device and the electric vehicle performs communications through the WLAN for charging the electric vehicle.

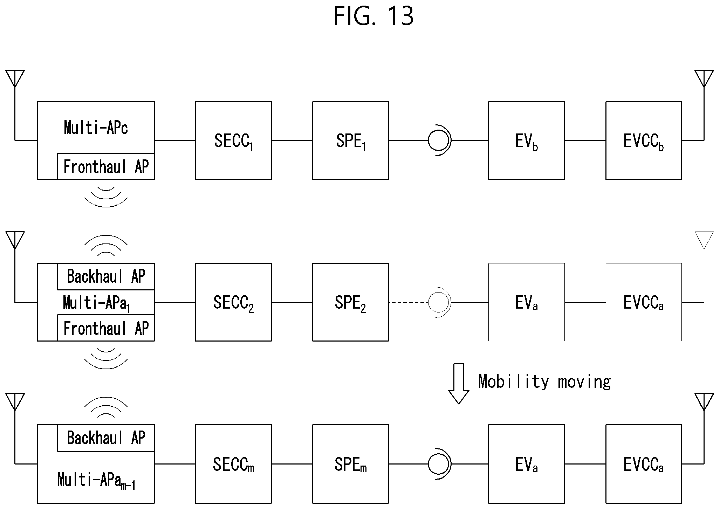

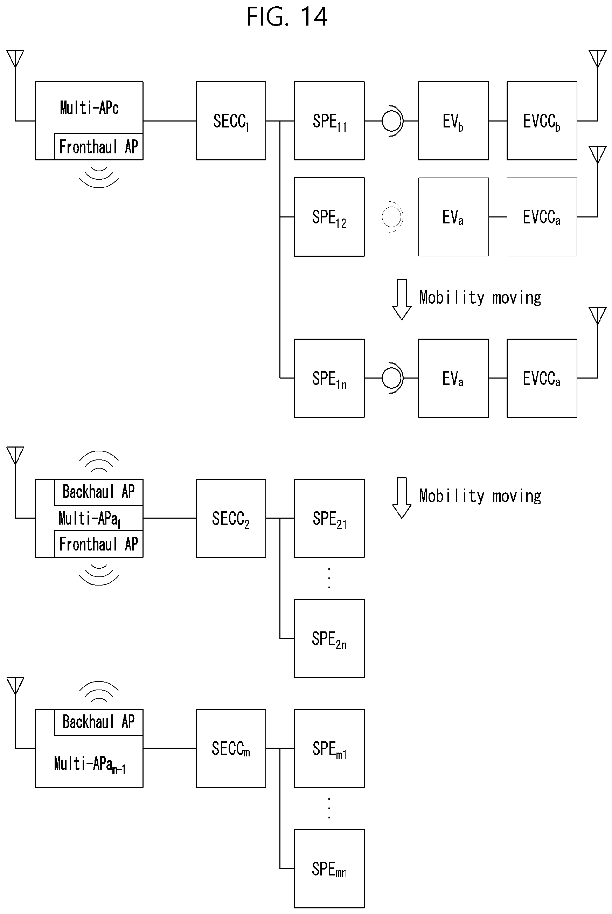

FIGS. 13 and 14 are conceptual diagrams illustrating a process of changing a primary assembly according to a vehicle movement during the D-WPT service in accordance with an embodiment of the present disclosure.

Referring to FIGS. 13 and 14, in the communication for the D-WPT service using the WLAN, two or more access points (APs) may be configured to provide a performance and appropriate coverage of the WLAN. A WLAN-based D-WPT communication may utilize mesh networking for a plurality of APs.

In an exemplary embodiment of the present disclosure, a plurality of SPEs may share a single SECC in a single SECC communication architecture for the D-WPT service.

In an exemplary embodiment of the present disclosure, each SPE may have its own SECC in a multiple SECC communication architecture for the D-WPT service.

Communications in compatibility class A and compatibility class B D-WPT systems may make use of a WLAN communications specified in an industrial standard such as IEEE 802.11-2020. Such WLAN communications may be used for communications between the electric vehicle and the D-WPT power supply device which are equipped with the D-WPT device.

Similarly to the S-WPT system, a plurality of EVCCs may share a single SECC in the single SECC communication architecture for the D-WPT service.

However, the number of EVCCs sharing the SECC may be affected by factors such as a size of the primary device for the D-WPT service and a range of a coverage supported by a physical layer of the WLAN.

As the vehicle moves, it may become necessary to release the pairing with the currently active SPE that is transmitting the power and to establish a pairing with a next SPE. In case where the next SPE and the current SPE are sharing a common SECC, the charging communication protocol and the charging protocol for the D-WPT service may be performed seamlessly.

In order to hand off a control of the D-WPT service protocol to a new SECC different from the SECC associated with the currently active SPE that is transmitting the power as the vehicle moves, a charging communication handoff process to the new SECC may be required.

Furthermore, in case where the vehicle leaves a coverage of the AP associated with the current SECC and enters a coverage of a new AP as the vehicle moves, the EVCC may be required to perform a charging communication handoff process to an AP controller or agent managing the new AP coverage.

Some existing industrial standards such as ISO 15118-20 specify procedures with a focus on the S-WPT service. Industrial standards such as IEC 61980-5 describes the specifications of circuits and systems for the D-WPT service. According to these standards, basic configurations of the D-WPT system may be similar to those of the S-WPT system. Hence, the communication protocol for the D-WPT system may be envisaged based on the communication protocols such as those specified in the ISO 15118-20 standard. However, the differences between the S-WPT and the D-WPT requires a development of a new communication protocol. The present disclosure provides items related to the development of the new communication protocol.

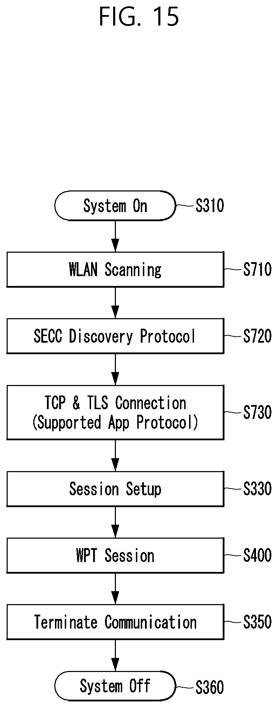

FIG. 15 is a flowchart illustrating a sequence of protocols for the D-WPT service according to an exemplary embodiment of the present disclosure.

The sequence of FIG. 15 may be described with reference to the embodiments illustrated in FIGS. 4-6.

Descriptions of the protocols or processes shown in FIG. 15 that are identical or substantially similar to those in the embodiments of FIGS. 4-6 are omitted for simplicity.

Each process in FIG. 15 may be performed by at least one of the entities: the EVCC, the SECC, the SDP entity connected to the SECC, or the AP controller managing the AP coverage to which the SECC belongs. The processes may also be performed through a cooperation of two or more entities.

Referring to FIG. 15, a WLAN scanning process may be performed (S710) after the system is turned on in the operation S310.

Based on a result of the operation S710, an SECC discovery protocol may be performed (S720).

Depending on the supported application protocol, a TCP and TLS connection process may be performed (S730).

After the operations S710-S730, a session setup process may be performed (S330).

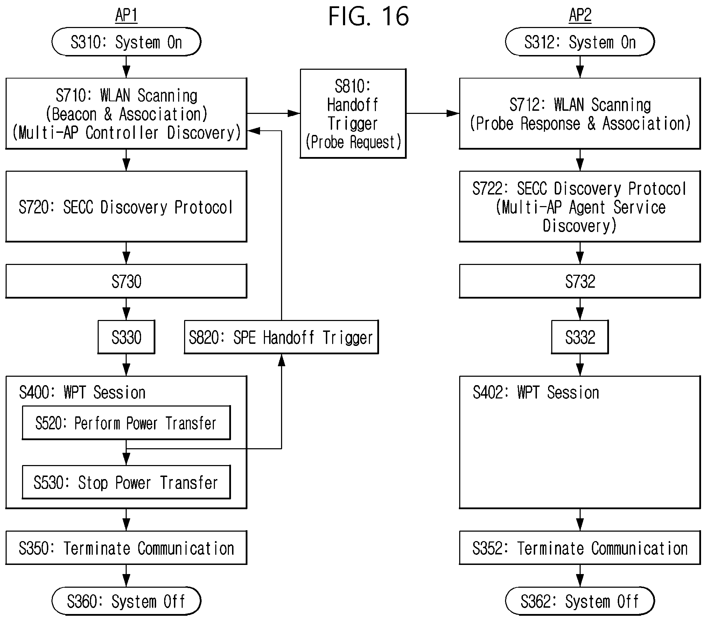

FIG. 16 is a flowchart illustrating a primary assembly change process according to the vehicle movement and a WLAN-based handoff process for the D-WPT service in accordance with an exemplary embodiment of the present disclosure.

FIG. 16 shows the charging communication process between the EVCC of the electric vehicle receiving power from a first primary assembly in a coverage of a first access point (AP1) and a first SECC (SECC1) connected to the first primary assembly.

In addition, FIG. 16 shows the charging communication process between a second SECC, SECC2, connected to a second primary assembly and the EVCC in case where the electric vehicle or mobility device is expected to receive power from the second primary assembly in a coverage of a second access point (AP2) because of the movement of the vehicle.

In addition, FIG. 16 illustrates the charging communication handoff process between the EVCC, SECC1, and SECC2. In this case, a controller of the first access point (AP1) connected to the first SECC (SECC1) and a controller of the second access point (AP2) connected to the second SECC (SECC2) may also engage in the charging communication and handoff process shown in FIG. 16.

Each process performed between the first SECC (SECC1) and the EVCC in the coverage of the first access point (AP1) may be fundamentally the same as or similar to corresponding process performed between the second SECC (SECC2) and the EVCC in the coverage of the second access point (AP2). For example, the operations S310 and S312, S710 and S712, S720 and S722, S730 and S732, S330 and S332, S400 and S402, S350 and S352, and S360 and S362 may be fundamentally the same as or similar to each other, respectively. In the following description, the focus will be put on the differences between the communication process related to the coverage of the first access point (AP1) and the communication process related to the coverage of the second access point (AP2), and detailed explanations of the operations that are identical or similar to each other will be omitted.

A charging communication handoff method for electric vehicle charging using multiple access points according to an exemplary embodiment of the present disclosure may include: an operation S820 in which the EVCC mounted in the electric vehicle transmits a handoff trigger request to the first SECC corresponding to the first primary assembly transmitting power to the electric vehicle by the D-WPT so that the first SECC performs the WLAN scanning (S710) to discover the second SECC located adjacent to the first SECC and capable of supporting the D-WPT service; and an operation S810 in which the EVCC transmits a message including the handoff trigger request to the second SECC based on a result of the WLAN scanning.

In this case, the WLAN scanning (S710) may be performed through a cooperation between the first SECC and a first AP controller managing the coverage of the first AP which covers the first SECC.

The WLAN scanning (S710) may include a process of discovering a second AP controller managing the coverage of the second AP related with the D-WPT road infrastructure capable of providing the D-WPT service through the cooperation between the first SECC and the first AP controller.

The WLAN scanning (S710, S712) may include a process of discovering the second SECC located in the coverage of the second AP related with the D-WPT road infrastructure capable of providing the D-WPT service and associated with the second primary assembly buried in or installed on the D-WPT road infrastructure through the cooperation between the first SECC and the first AP controller.

The charging communication handoff method for electric vehicle charging using multiple access points according to an exemplary embodiment of the present disclosure may further include an operation S530 of terminating the wireless power transfer in cooperation with the first SECC after the operation S820 of transmitting the handoff trigger request to the first SECC.

It will be apparent to those skilled in the art that the operation S530 shown in FIG. 16 may be performed after the transmission of the handoff trigger request in the operation S820 in an exemplary embodiment of the present disclosure, or may be performed after the probing/association with the second SECC is successfully completed in the trigger/probing operation S810.

In the charging communication handoff method for electric vehicle charging using multiple access points according to an exemplary embodiment of the present disclosure, the message including the handoff trigger request and transmitted to the second SECC may further include a probing request for the second SECC as denoted in the operation S810.

The charging communication handoff method for electric vehicle charging using multiple access points according to an exemplary embodiment of the present disclosure may further include an operation S712 of performing a probing and association between the EVCC and the second SECC, through the cooperation between the EVCC and the second SECC, after transmitting the message including the handoff trigger request to the second SECC.

The charging communication handoff method for electric vehicle charging using multiple access points according to an exemplary embodiment of the present disclosure may further include an operation S722 of performing the SECC discovery protocol (SDP), through the cooperation between the EVCC and the second SECC, after transmitting the message including the handoff trigger request to the second SECC.

The order of the operations S712 and S722 is not limited to the sequence shown in FIG. 16. In an alternative embodiment, the operations S712 and S722 may be performed concurrently, or the operation S722 may be performed before the operation S712 is performed.

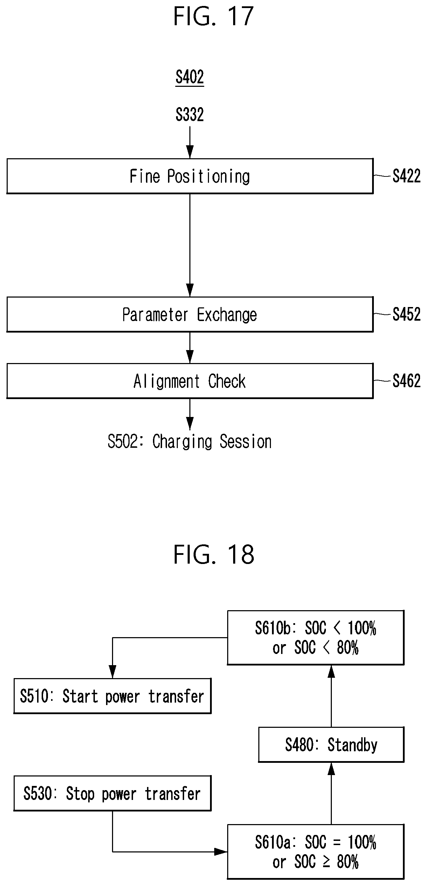

FIG. 17 is a flowchart illustrating a part of a process of performing the WPT session after the handoff process shown in FIG. 16.

The charging communication handoff method for electric vehicle charging using multiple access points according to an exemplary embodiment of the present disclosure may include: after the message including the handoff trigger request is transmitted to the second SECC (S810) and the session is established between the EVCC and the second SECC (S332), performing a fine positioning of the electric vehicle through the cooperation between the EVCC and the second SECC (S422); exchanging parameters between the EVCC and the second SECC (S452); and performing an alignment check between the electric vehicle and the second primary assembly correlated with the second SECC through the cooperation between the EVCC and the second SECC (S462).

In the WPT session (S402) between the EVCC and the second SECC, at least a part of the pairing process (S420 in FIG. 5), the authentication, authorization, and certificate processing/installation process (S430), the service discovery and service selection process (S440), and the final compatibility check process (S450 in FIG. 5) may be omitted. In such a case, at least a part of the processes mentioned above may be replaced or omitted, in the WPT session (S402) between the EVCC and the second SECC, based on information shared and the protocol performed in the WPT session (S400) between the EVCC and the first SECC.

FIG. 18 is a flowchart illustrating a part of the process of performing the WPT session of FIG. 15.

The charging communication handoff method for electric vehicle charging using multiple access points according to an exemplary embodiment of the present disclosure may further include an operation of entering the standby state S480 when the state of charge (SOC) of an electric vehicle reaches a predetermined reference value by the D-WPT service between the first primary assembly and the electric vehicle (S610a); and an operation S510 of resuming the wireless power transfer for the electric vehicle based on the D-WPT service when the SOC of the electric vehicle in the standby state (S480) is lower than a preset reference value (S610b).

In an exemplary embodiment, the process of the present disclosure may enter the standby state (S480) when a condition of an operation S610a is satisfied in a state that the power transfer is terminated or paused (S530) after the handoff request process (S820).

In another exemplary embodiment, the process of the present disclosure may terminate or pause the power transfer (S530) or enter the standby state (S480) when the SOC reaches the threshold during the charging operation S520.

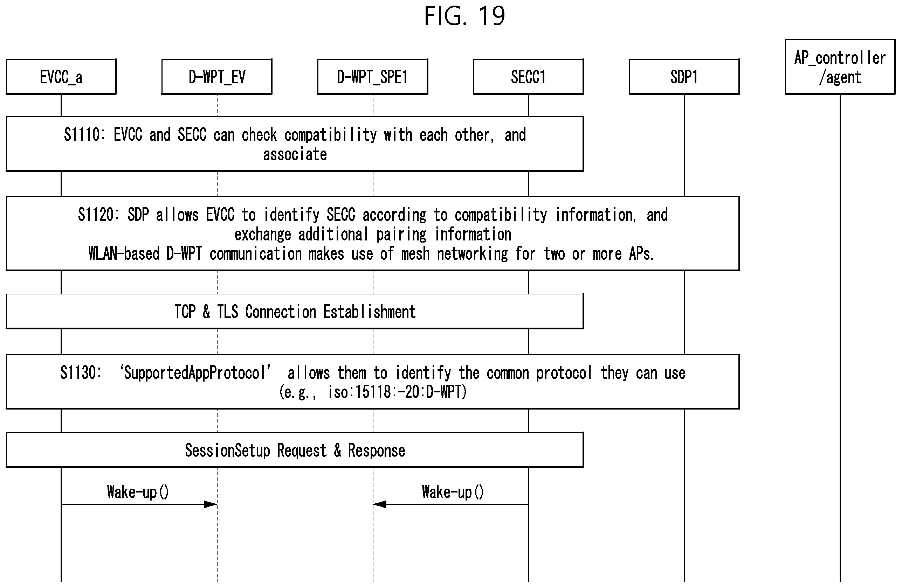

FIG. 19 is a sequence diagram illustrating compatibility check process, association, SECC discovery, identification, and pairing processes, and a common protocol identification process for the D-WPT service according to an exemplary embodiment of the present disclosure.

The charging communication method for electric vehicle charging according to an exemplary embodiment of the present disclosure is performed by the EVCC correlated with the secondary assembly (D-WPT_EV) mounted in the electric vehicle and receiving power from the primary assembly (D-WPT_SPE1). The method may include an operation S1110 in which the EVCC performs an association with the first SECC (SECC1) based on the compatibility information shared between the EVCC (EVCC_a) and the first SECC (SECC1) associated with the primary assembly (D-WPT_SPE1) transferring power to the electric vehicle; an operation S1120 in which the EVCC (EVCC_a) identifies the first EVCC (EVCC1) providing the D-WPT based on the SECC discovery protocol (SDP) related to the first SECC (SECC1); and an operation S1130 of identifying a common protocol applicable between the first SECC (SECC1) and the EVCC (EVCC_a).

In at least a part of the operation S1110, the protocol specified in the standard ISO 15118-8 and IEEE 802.11 L2 connect technology may be used.

In at least a part of the operation S1120, the protocol specified in the standard ISO 15118-20 and L3 Discovery technology may be used.

In at least a part of the operation S1130, the protocol negotiation scheme specified in the standard ISO 15118-2 or ISO 15118-20 may be used.

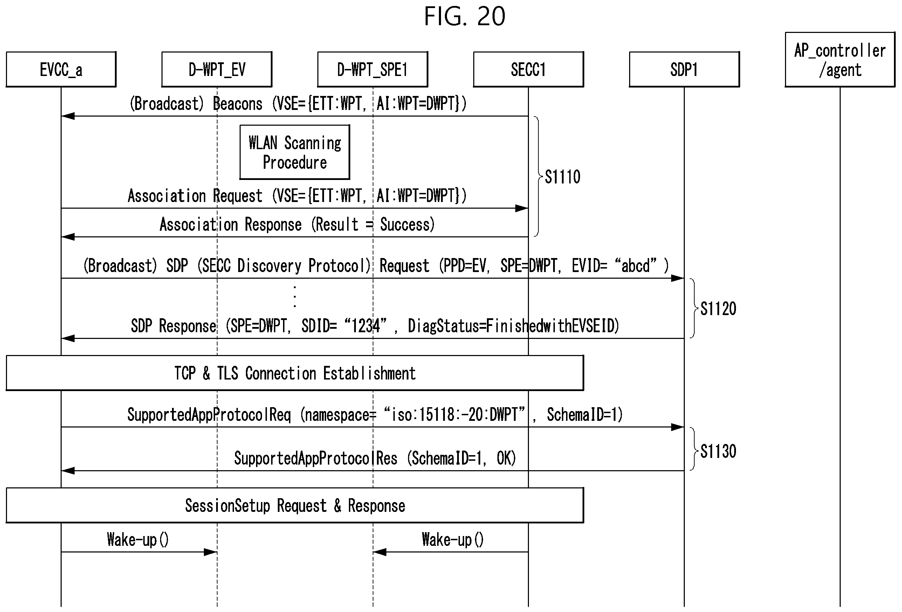

FIG. 20 is a sequence diagram illustrating the protocols shown in FIG. 19 in detail.

The operation S1110 in which the EVCC (EVCC_a) performs the association with the first SECC (SECC1) may include an operation in which the EVCC (EVCC_a) receives a beacon message broadcast by the first SECC (SECC1) as a part of the WLAN scanning process; an operation in which the EVCC (EVCC_a) transmits an association request message to the first SECC (SECC1) identified based on the beacon message; and an operation in which the EVCC (EVCC_a) receives an association response message including information indicating a success of the association from the first SECC (SECC1).

The broadcast beacon message may reuse data such as the ETT data for the WPT as specified in the standard such as ISO 15118-8.

In order for the D-WPT to be implemented under ISO 15118 standard, it may be necessary to define the aforementioned VSE.

The operation S1120 in which the EVCC (EVCC_a) identifies the SECC (SECC1) providing the D-WPT based on the SDP related to the SECC may include: an operation in which the EVCC (EVCC_a) broadcasts an SDP request message related to the first SECC (SECC1); and an operation in which the EVCC (EVCC _a) receives an SDP response message from an SDP entity (SDP1) related to the first SECC (SECC1).

In the operation S1120, one or more parameters and there values such as "PPD=EV, SPE=DWPT, and EVID= "abcd"" may be included in the broadcast message. Meanwhile, a supply device identifier (SDID) of at least one electric vehicle supply equipment (EVSE) supporting the D-WPT may be included in the response message.

The operation S1130 of identifying the common protocol applicable between the first SECC (SECC1) and the EVCC (EVCC _a) may include an operation in which the EVCC (EVCC_a) transmits a supported application protocol request message to the SDP entity (SDP1) related to the first SECC (SECC1); and an operation in which the EVCC (EVCC_a) receives a supported application protocol response message from the SDP entity (SDP1).

In the operation S1130, a message sequence format including the message pair SupportedAppProtocolReq and SupportedAppProtocolRes may be used to define and exchange the supported application protocols.

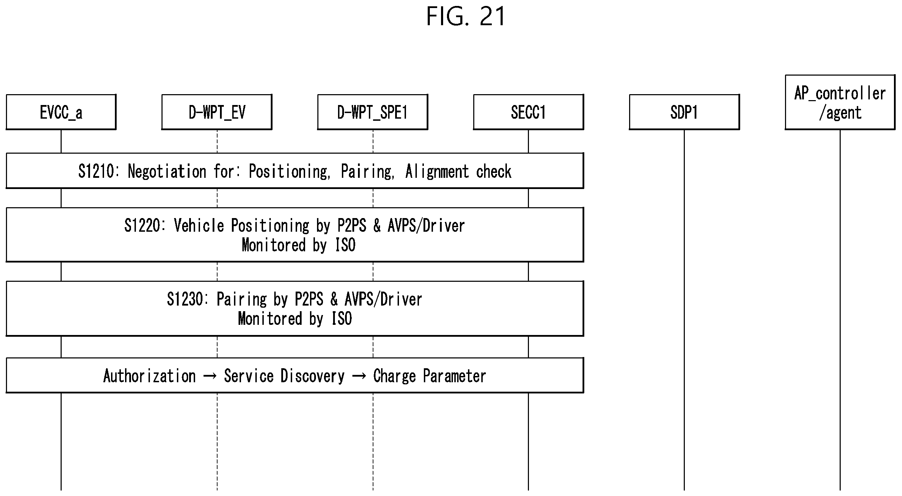

FIG. 21 is a sequence diagram illustrating protocol negotiation, positioning, and pairing processes for the D-WPT service according to an exemplary embodiment of the present disclosure.

The charging communication method for electric vehicle charging according to an exemplary embodiment of the present disclosure may further include an operation S1210 in which the EVCC (EVCC_a) performs a negotiation for the positioning, pairing, and alignment check in cooperation with the first SECC (SECC1); an operation S1220 in which the EVCC (EVCC_a) performs the vehicle positioning in cooperation with the first SECC (SECC1); and an operation S1230 in which the EVCC (EVCC_a) performs the pairing in cooperation with the first SECC (SECC1).

For at least a part of the operation S1210, a method for selecting settings for the positioning, pairing, and alignment check for Point-to-Point Signaling (P2PS) may be used.

For at least a part of the operation S1220, the positioning by using the P2PS according to the IEC 61980-5 standard may be used.

For at least a part of the operation S1230, the pairing by using the P2PS according to the IEC 61980-5 standard may be used.

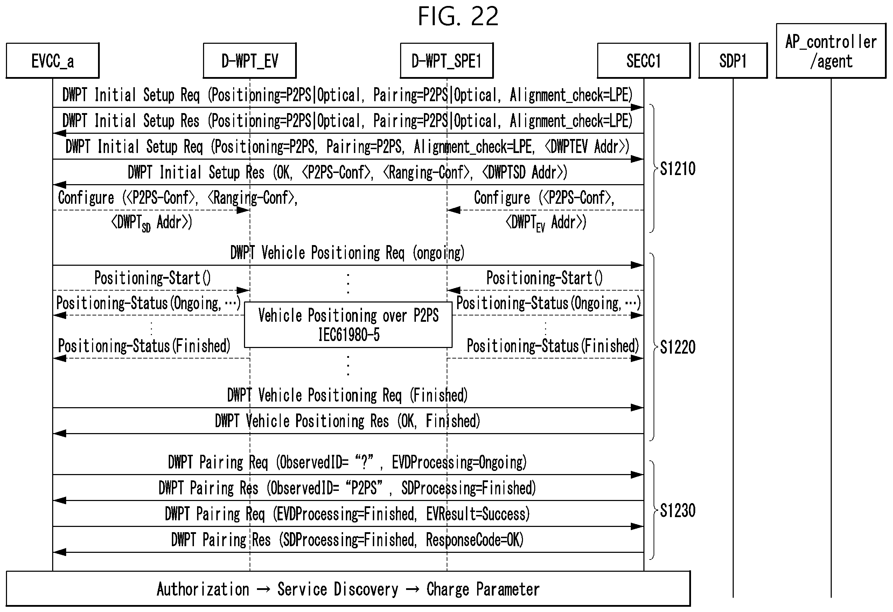

FIG. 22 is a sequence diagram illustrating the protocol shown in FIG. 21 in detail.

The operation S1210 in which the EVCC (EVCC_a) performs the negotiation for the positioning, pairing, and alignment check in cooperation with the first SECC (SECC 1) may include an operation in which the EVCC (EVCC_a) transmits a first DWPT initial setup request message DWPTInitialSetupReq() to the SECC and receives a first DWPT initial setup response message DWPTInitialSetupRes() from the SECC; an operation in which the EVCC (EVCC_a) transmits a second DWPT initial setup request message including secondary assembly related information (DWPT_EV_Addr) to the SECC and receives a second DWPT initial setup response message including primary assembly related information (DWPT_SD_Addr) from the SECC; and an operation in which the EVCC (EVCC_a) transfers the primary assembly related information to the secondary assembly (D-WPT_EV).

At this time, a parameter indicating detailed means for the P2PS such as a low power excitation (LPE) signaling for the positioning, pairing, and alignment check may be included in the messages.

In the operation S1210, compatibility parameters may be exchanged in addition to the above information, DWPT_EV_Addr and DWPT_SD_Addr. Examples of the compatibility parameters may indicate a positioning method, a pairing method, an alignment check method, a coordination system, and parameters for the P2PS.

The operation S1220 in which the EVCC (EVCC_a) performs the vehicle positioning in cooperation with the first SECC (SECC1) may include an operation in which the EVCC transmits a DWPT vehicle positioning request message DWPVehiclePositioningReq() to the SECC; an operation in which the EVCC monitors information on the positioning process and performs the positioning in cooperation with the secondary assembly (D-WPT_EV); an operation in which the EVCC transmits a DWPT vehicle positioning completion request message DWPVehiclePositioningReq(Finished) to the SECC when the positioning is successfully completed; and an operation in which the EVCC receives a DWPT vehicle positioning completion response message DWPVehiclePositioningRes(Finished) from the SECC.

The operation S1230 in which the EVCC (EVCC_a) performs the pairing in cooperation with the first SECC (SECC 1) may include an operation in which the EVCC transmits a first DWPT pairing request message DWPTPairingReq() to the SECC; an operation in which the EVCC receives a first DWPT pairing response message DWPTPairingRes() from the SECC; an operation in which the EVCC transmits a second DWPT pairing request message including information on whether the pairing is successful or not on the electric vehicle side, e.g., parameters and their values of "EVDProcessing=Finished, EVResule=Success" to the SECC; and an operation in which the EVCC receives a second DWPT pairing response message including information on whether the pairing is successful or not on the primary assembly side, e.g., parameters and their values of "SDProcessing=Finished, ResponseCode=OK" from the SECC.

In the operation S1230, the pairing may be omitted because of following reasons:
Since the primary devices for the D-WPT are buried in the road and are connected in series, it may be unlikely that a problem will occur in the pairing process while the vehicle is in motion or driving along the road. Therefore, once the pairing process is successful initially when the vehicle enters the D-WPT road, the pairing process may be appropriately omitted or replaced with another simplified process in subsequent handoff processes.

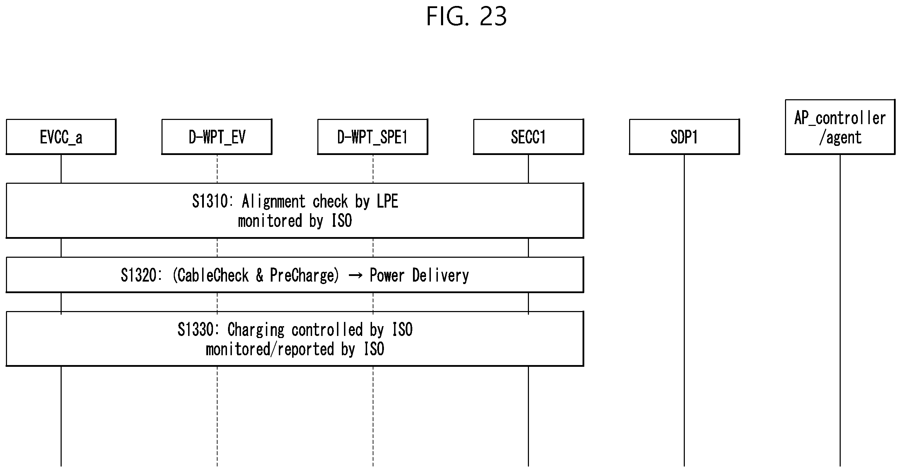

FIG. 23 is a sequence diagram illustrating alignment check, cable check, precharging, charging control, and monitoring processes for the D-WPT service according to an exemplary embodiment of the present disclosure.

The charging communication method for electric vehicle charging according to an exemplary embodiment of the present disclosure may further include an operation S1310 in which the EVCC performs an alignment check in cooperation with the SECC; an operation S1320 in which the EVCC performs a cable check and precharging and then starts the power transfer in cooperation with the SECC; and an operation S1330 in which the EVCC monitors and controls the power transfer process in cooperation with the SECC.

At least a part of the operation S1310 may utilize a docking technology by UWB defined in a standard such as IEC 61851-27. The operations S1320 and S1330 may be performed while the charging is actually being performed.

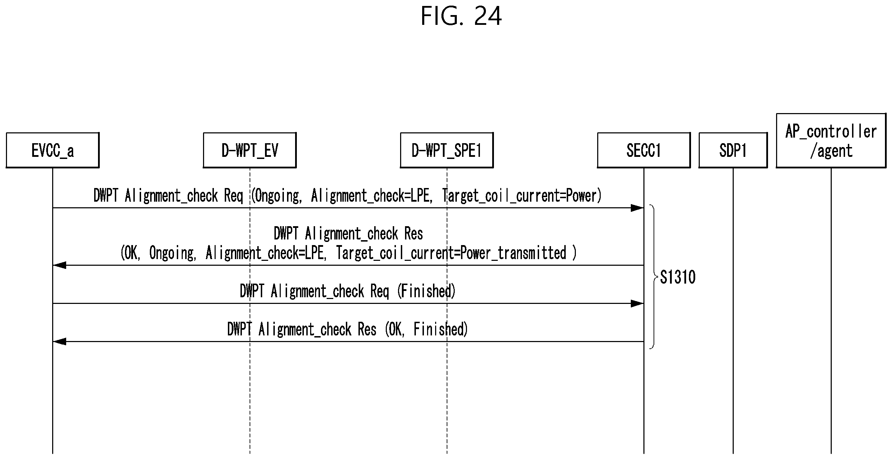

FIG. 24 is a sequence diagram illustrating the alignment check process shown in FIG. 23 in detail.

The operation S1310 of performing the alignment check in cooperation with the SECC may include an operation in which the EVCC transmits a first DWPT alignment check request message to the SECC; an operation in which the EVCC receives a first DWPT alignment check response message from the SECC; an operation in which the EVCC transmits a second DWPT alignment check request message to finish the alignment check to the SECC; and an operation in which the EVCC receives a second DWPT alignment check response message to finish the alignment check from the SECC.

The detailed protocol shown in FIG. 24 may also be performed using an alignment check process specified in the IEC 61980-5 standard.

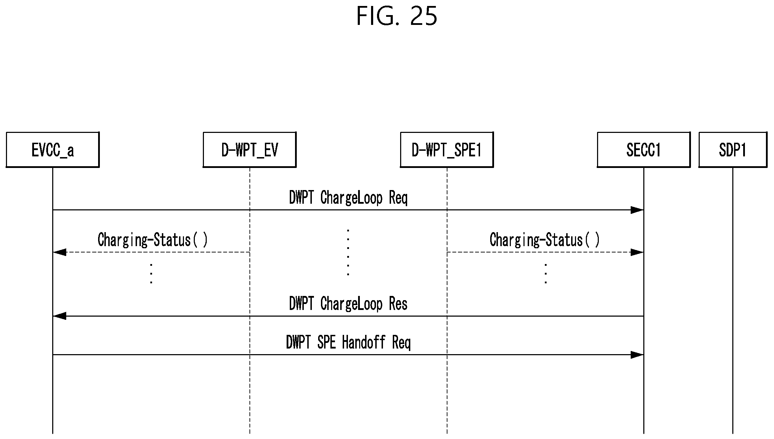

FIGS. 25 through 27 are sequence diagrams illustrating SECC and/or AP handoff processes for the D-WPT service when vehicle moves according to an exemplary embodiment of the present disclosure.

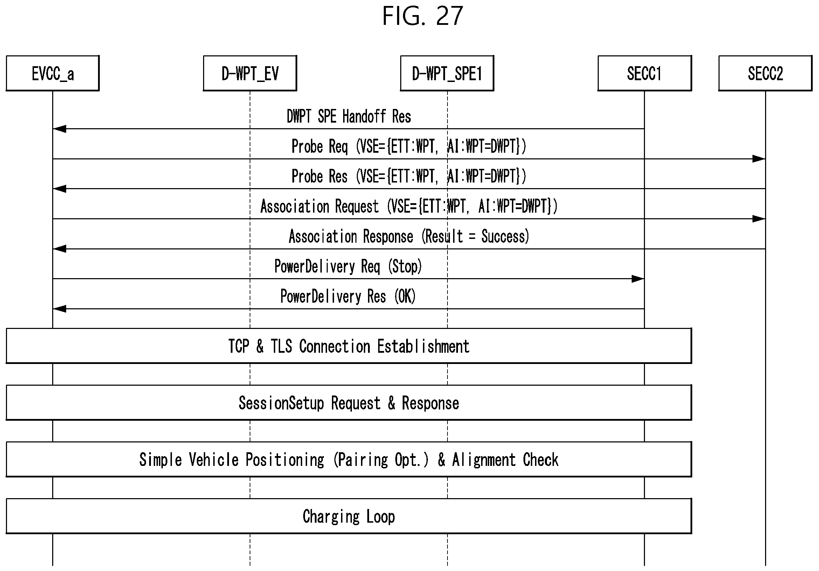

Referring to FIG. 27, the charging communication handoff method for electric vehicle charging according to an exemplary embodiment of the present disclosure may include an operation in which the EVCC mounted in the electric vehicle receives a response message DWPTSPEHandoffRes() to a DWPT SPE handoff request message DWPTSPEHandoffReq() from the first SECC (SECC1) correlated with the first primary assembly transmitting power to the electric vehicle by the D-WPT while the electric vehicle is in motion or driving; an operation in which the EVCC performs the probing and association in cooperation with the second SECC (SECC2) correlated with a second primary assembly suitable for transmitting power to the electric vehicle by the D-WPT based on the response message DWPTSPEHandoffRes() to the DWPT SPE handoff request message; and an operation in which the EVCC transmits a message PowerDeliveryReq(STOP) requesting to terminate the power transfer to the first SECC (SECC1) when the probing and association with the second SECC (SECC2) are successful.

At this time, the operation of transmitting the message requesting to terminate the power transfer to the first SECC (SECC1) may correspond to the operation S530 in FIG. 16.

Although it is shown in FIG. 27 that the operation of transmitting a message PowerDeliveryReq(STOP) requesting to terminate the power transfer to the first SECC (SECC1) is performed when the probing and association with the second SECC (SECC2) are successful, it will be apparent to those skilled in the art that the request for terminating the power transfer may be performed after the transmission of the handoff trigger request in the operation S820 similarly to the operation S530 shown in FIG. 16 in an alternative embodiment of the present disclosure, or may be performed after the probing/association with the second SECC is successfully completed in the trigger/probing operation S810.

In FIG. 27, after the message PowerDeliveryReq(STOP) requesting to terminate the power transfer is transmitted to the first SECC (SECC1), TCP and TLS connection establishment, session setup request and response, simple vehicle positioning (pairing opt.) and alignment check, and charging loop processes may be performed between the EVCC (EVCC_a) and the first SECC (SECC1), and then the communication session between EVCC (EVCC_a) and the first SECC (SECC1) may be terminated.

Meanwhile, although not shown in FIG. 27, the TCP and TLS connection establishment, session setup request and response, simple vehicle positioning (pairing opt.) and alignment check, and charging loop processes may be performed to establish a new communication session between the EVCC (EVCC_a) and the first SECC (SECC1) after the probing and association operation between the EVCC (EVCC_a) and the first SECC (SECC1) is successfully completed.

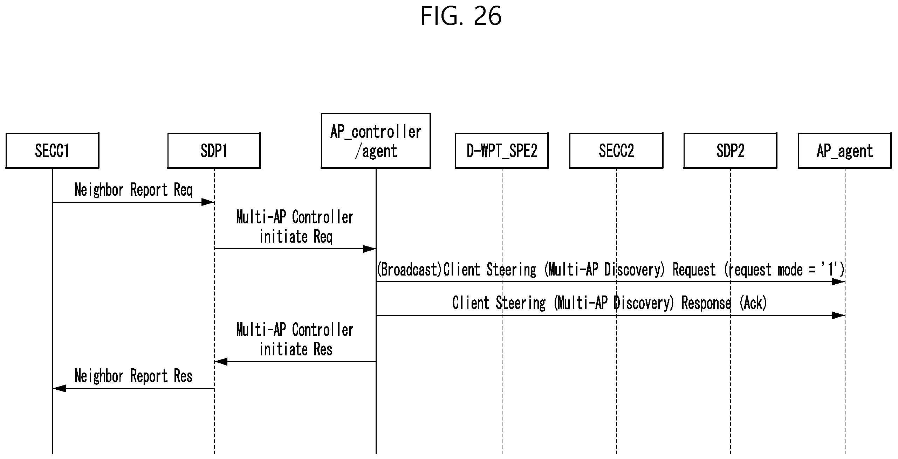

Referring to FIG. 26 the charging communication handoff method for electric vehicle charging according to an exemplary embodiment of the present disclosure may include an operation in which the first SECC (SECC1) transmits a request message requesting information on adjacent APs or information on at least one SECCs capable of providing the D-WPT service (e.g., Neighbor Report Request or Multi-AP Controller Initiate Request message) to the first AP controller managing the coverage of the first access point (AP1) in which the first SECC (SECC1) is located; an operation in which the first AP controller broadcasts a steering request message (e.g., Client Steering (Multi-AP Discovery) Request message) including a request for the information on the at least one SECCs capable of providing the D-WPT service; an operation in which the second AP controller managing the coverage of the second access point (AP2) where the second SECC (SECC2) is located, transmits a steering response message (e.g., Client Steering (Multi-AP Discovery) Response (Ack) message) including information on the second SECC to the first AP controller; and an operation in which the first SECC (SECC1) receives a response message (e.g., Multi-AP Controller Initiate Response or Neighbor Report Response message) including information on the second SECC (SECC2) from the first AP controller.

The charging communication handoff method for electric vehicle charging according to an exemplary embodiment of the present disclosure may further include an operation in which the first SECC (SECC1) transmits a neighbor report request message NeighborReportReq to a first SDP entity (SDP1) related to the first SECC (SECC1); an operation in which the first SDP entity (SDP1) transmits a multiple AP controller initiate request message Multi-APControllerInitiateReq to the first AP controller managing the coverage of the first access point (AP1) where the first SDP entity (SDP1) and the first SECC (SECC1) are located; an operation in which the first SDP entity (SDP1) receives a multiple AP controller initiate response message Multi-APControllerInitiateRes from the first AP controller; and an operation in which the first SECC receives a neighbor report response message NeighborReportRes from the first SDP entity (SDP1).

The operation that the EVCC performs the probing and association in cooperation with the second SECC (SECC2) correlated with the second primary assembly may include an operation in which the EVCC transmits a probe request message ProbeReq related to the D-WPT service to the second SECC (SECC2); an operation in which the EVCC receives a probe response message ProbeRes related to the D-WPT service from the second SECC (SECC2); an operation in which the EVCC transmits an association request message AssociationRequest related to the D-WPT service to the second SECC (SECC2); and an operation in which the EVCC receives an association response message AssociationResponse including information on a success of the D-WPT service (e.g., "Result = Success") from the second SECC (SECC2).

Referring to FIG. 25, the charging communication handoff method for electric vehicle charging according to an exemplary embodiment of the present disclosure may further include an operation in which the EVCC and the first SECC (SECC1) monitors a power transfer status between the first primary assembly and the secondary assembly by exchanging DWPT ChargeLoop Request and DWPT ChargeLoop Response message pairs; and an operation in which the EVCC transmits a handoff request message (DWPT SPE Handoff Request) to the first SECC (SECC1).

Although the handoff process is initiated by the EVCC in the exemplary embodiments illustrated in FIG. 25-27, it will be apparent to those skilled in the art that, in another embodiments of the present disclosure, the handoff process may also be initiated by the SECC, by an SDP entity, or by an AP controller/agent.

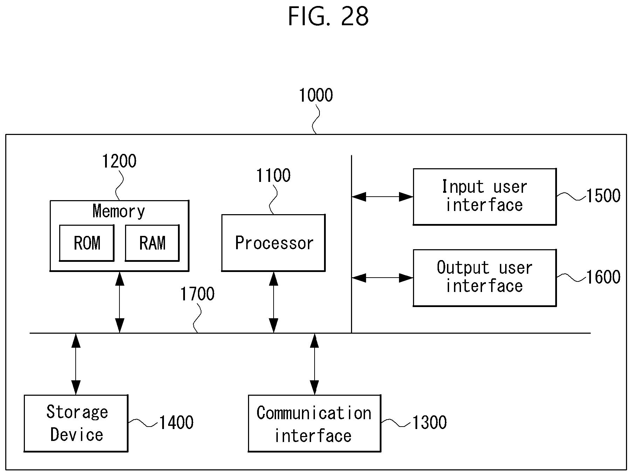

FIG. 28 is a block diagram of a charging communication apparatus for the D-WPT according to an exemplary embodiment of the present disclosure and illustrates a physical configuration of an internal structure of a computing system suitable for implementing a generalized EVCC, SECC, SDP entity, and/or AP controller.

Although omitted in the embodiments shown in FIGS. 1-27, a processor and a memory may be electronically connected to the components of the device, and the operations of the components may be controlled or managed by the processor.

At least some of the charging communication process for charging the electric vehicle according to an exemplary embodiment of the present disclosure may be performed by the computing system 1000 of FIG. 28.

Referring to FIG. 28, the computing system 1000 according to an embodiment of the present disclosure may be configured to include a processor 1100, a memory 1200, a communication interface 1300, a storage device 1400, an input interface 1500, an output interface 1600, and a bus 1700.

The computing system 1000 according to an embodiment of the present disclosure may include at least one processor 1100 and the memory 1200 storing program instructions instructing the at least one processor 1100 to perform at least one process step. At least some of the operations or process steps of the method according to an embodiment of the present disclosure may be performed by the at least one processor 1100 loading and executing the program instructions from the memory 1200.

The processor 1100 may include a central processing unit (CPU) or a graphics processing unit (GPU) or may be implemented by another kind of dedicated processor suitable for performing the method of the present disclosure.

Each of the memory 1200 and the storage device 1400 may be comprised of at least one of a volatile storage medium and a non-volatile storage medium. For example, the memory 1200 may be comprised of at least one of a read only memory (ROM) and a random access memory (RAM).

Additionally, the computing system 1000 may include the communication interface 1300 performing communications through a wireless communication network.

Additionally, the computing system 1000 may further include the storage device 1400, the input interface 1500, and the output interface 1600.

The components of the computing system 1000 may be connected to each other by the system bus 1700 to communicate with each other.

The apparatus including the processor 1100 according to an exemplary embodiment of the present disclosure may be any data processing device capable of communications through a network such as a desktop computer, a laptop computer, a notebook PC, a smartphone, a tablet PC, a mobile phone, a smart watch, smart glasses, an e-book reader, a portable multimedia player (PMP), a portable game console, a navigation device, a digital camera, a digital multimedia broadcasting (DMB) player, a digital audio recorder, a digital audio player, a digital video recorder, a digital video player, and a personal digital assistant (PDA).

The electric vehicle communication controller (EVCC) according to an exemplary embodiment of the present disclosure, which is mounted in an electric vehicle and associated with a secondary assembly suitable for receiving electric power from a primary assembly, may include a processor 1100 configured to receive at least one instruction from a memory 1200 and execute the at least one instruction.

The EVCC according to an exemplary embodiment of the present disclosure includes the processor 1100 receiving at least one instruction from the memory 1200 and executing the at least one instruction. The processor 1100, by executing the at least one instruction, performs the association with the SECC based on compatibility information shared between the EVCC and the SECC correlated with the primary assembly; determines the SECC capable of providing D-WPT based on the SECC discovery Protocol (SDP) related to the SECC; and determines the common protocol applicable between the SECC and the EVCC.

When the EVCC performs the association with the SECC by executing the at least one instruction, the processor 1100 may receive the beacon message broadcast by the SECC as a part of the WLAN scanning process, transmit the association request message to the SECC identified based on the beacon message, and receive the association response message including information indicating a success of the association from the SECC.

When the EVCC identifies the SECC providing the D-WPT based on the SDP related to the SECC by executing the at least one instruction, the processor 1100 may broadcast the SDP request message related to the EVCC and receive the SDP response message from an SDP entity related to the SECC.

When the EVCC identifies a common protocol applicable between the SECC and the EVCC by executing the at least one instruction, the processor 1100 may transmit the supported application protocol request message to the SDP entity related to the SECC and receive the supported application protocol response message from the SDP entity.

By executing the at least one instruction, the processor 1100 may enable the EVCC to perform the negotiation for the positioning, pairing, and alignment check in cooperation with the SECC, perform the vehicle positioning in cooperation with the SECC, and perform the pairing in cooperation with the SECC.

By executing the at least one instruction, the processor 1100 may enable the EVCC to perform the alignment check in cooperation with the SECC, perform a cable check and precharging and then start the power transfer in cooperation with the SECC, and monitor and control the power transfer process in cooperation with the SECC.

The electric vehicle communication controller (EVCC) according to an exemplary embodiment of the present disclosure is mounted in an electric vehicle and is related to a secondary assembly receiving power from a primary assembly.

The EVCC according to an exemplary embodiment of the present disclosure includes the processor 1100 receiving at least one instruction from the memory 1200 and executing the at least one instruction. The processor 1100, by executing the at least one instruction, may transmit a handoff trigger request to the first SECC corresponding to the first primary assembly transmitting power to the electric vehicle by the D-WPT so that the first SECC performs the WLAN scanning to discover the second SECC located adjacent to the first SECC and capable of supporting the D-WPT service, and transmit the message including the handoff trigger request to the second SECC based on the result of the WLAN scanning.

In this case, the WLAN scanning may be performed through a cooperation between the first SECC and the first AP controller managing the coverage of the first AP where the first SECC is located.

The WLAN scanning may include a process of discovering a second AP controller managing the coverage of the second AP related with the D-WPT road infrastructure capable of providing the D-WPT service through the cooperation between the first SECC and the first AP controller.

The WLAN scanning may include a process of discovering the second SECC located in the coverage of the second AP related with the D-WPT road infrastructure capable of providing the D-WPT service and correlated with the second primary assembly buried in or installed on the D-WPT road infrastructure through the cooperation between the first SECC and the first AP controller.

After the operation of transmitting the handoff trigger request to the first SECC, the processor 1100 may terminate the wireless power transfer in cooperation with the first SECC.

The message including the handoff trigger request and transmitted to the second SECC may further include the probing request for the second SECC.

After transmitting the message including the handoff trigger request to the second SECC, the processor 1100 may perform the probing and association between the EVCC and the second SECC through the cooperation between the EVCC and the second SECC.

After transmitting the message including the handoff trigger request to the second SECC, the processor 1100 may perform the SECC discovery protocol (SDP) through the cooperation between the EVCC and the second SECC.

After the processor 1100 transmits the message including the handoff trigger request to the second SECC and the session is established between the EVCC and the second SECC, the processor 1100 may enable the EVCC to perform the fine positioning of the electric vehicle through the cooperation between the EVCC and the second SECC, exchange parameters between the EVCC and the second SECC, and perform the alignment check between the electric vehicle and the second primary assembly correlated with the second SECC through the cooperation between the EVCC and the second SECC.

The processor 1100 may enable the EVCC to enter the standby state when the state of charge (SOC) of an electric vehicle reaches a predetermined reference value by the D-WPT service between the first primary assembly and the electric vehicle, and resume the wireless power transfer for the electric vehicle based on the D-WPT service when the SOC of the electric vehicle in the standby state is lower than a preset reference value.

The apparatus and method according to exemplary embodiments of the present disclosure can be implemented by computer-readable program codes or instructions stored on a computer-readable intangible recording medium. The computer-readable recording medium includes all types of recording device storing data which can be read by a computer system. The computer-readable recording medium may be distributed over computer systems connected through a network so that the computer-readable program or codes may be stored and executed in a distributed manner.

The computer-readable recording medium may include a hardware device specially configured to store and execute program instructions, such as a ROM, RAM, and flash memory. The program instructions may include not only machine language codes generated by a compiler, but also high-level language codes executable by a computer using an interpreter or the like.

Some aspects of the present disclosure described above in the context of the device may indicate corresponding descriptions of the method according to the present disclosure, and the blocks or devices may correspond to operations of the method or features of the operations. Similarly, some aspects described in the context of the method may be expressed by features of blocks, items, or devices corresponding thereto. Some or all of the operations of the method may be performed by (or using) a hardware device such as a microprocessor, a programmable computer, or electronic circuits, for example. In some exemplary embodiments, one or more of the most important operations of the method may be performed by such a device.

In some exemplary embodiments, a programmable logic device such as a field-programmable gate array may be used to perform some or all of functions of the methods described herein. In some exemplary embodiments, the field-programmable gate array may be operated with a microprocessor to perform one of the methods described herein. In general, the methods are preferably performed by a certain hardware device.

The description of the disclosure may be merely exemplary in nature and, thus, variations that do not depart from the substance of the disclosure may be intended to be within the scope of the disclosure. Such variations may not be to be regarded as a departure from the spirit and scope of the disclosure. Thus, it will be understood by those of ordinary skill in the art that various changes in form and details may be made without departing from the spirit and scope as defined by the following claims.

## Claims

1. A charging communication method for electric vehicle charging, performed by an electric vehicle communication controller (EVCC) mounted in an electric vehicle and correlated with a secondary assembly receiving power from a primary assembly, the method comprising:
performing an association with a supply equipment communication controller (SECC) correlated with the primary assembly transferring power to the electric vehicle based on compatibility information shared between the EVCC and the SECC;
identifying the SECC providing a dynamic wireless power protocol (D-WPT) based on an SECC discovery protocol (SDP) related to the SECC; and
identifying a common protocol applicable between the SECC and the EVCC.

2. The charging communication method of claim 1, wherein performing the association with the SECC comprises:
receiving a beacon message broadcast by the SECC as a part of a wireless local area network (WLAN) scanning process;
transmitting an association request message to the SECC identified based on the beacon message; and
receiving an association response message including information indicating a success of the association from the SECC.

3. The charging communication method of claim 1, wherein identifying the SECC providing the D-WPT based on the SDP related to the SECC comprises:
broadcasting an SDP request message related to the EVCC; and
receiving an SDP response message from an SDP entity related to the SECC.

4. The charging communication method of claim 1, wherein identifying the common protocol applicable between the SECC and the EVCC comprises:
transmitting a supported application protocol request message to the SDP entity related to the SECC; and
receiving a supported application protocol response message from the SDP entity.

5. The charging communication method of claim 1, further comprising:
performing a negotiation for positioning, pairing, and alignment check in cooperation with the SECC;
performing a vehicle positioning in cooperation with the SECC; and
performing a pairing in cooperation with the SECC.

6. The charging communication method of claim 5, wherein performing the negotiation for positioning, pairing, and alignment check in cooperation with the SECC comprises:
transmitting a first DWPT initial setup request message to the SECC and receiving a first DWPT initial setup response message from the SECC;
transmitting a second DWPT initial setup request message including secondary assembly related information to the SECC and receiving a second DWPT initial setup response message including primary assembly related information from the SECC; and
transferring the primary assembly related information to the secondary assembly.

7. The charging communication method of claim 5, wherein performing the vehicle positioning in cooperation with the SECC comprises:
transmitting a DWPT vehicle positioning request message to the SECC;
monitoring information on a positioning process and performing the positioning in cooperation with the secondary assembly;
transmitting a DWPT vehicle positioning completion request message to the SECC when the positioning is successfully completed; and
receiving a DWPT vehicle positioning completion response message from the SECC.

8. The charging communication method of claim 5, wherein performing the pairing in cooperation with the SECC comprises:
transmitting a first DWPT pairing request message to the SECC;
receiving a first DWPT pairing response message from the SECC;
transmitting a second DWPT pairing request message including information on whether a pairing is successful or not on an electric vehicle side; and
receiving a second DWPT pairing response message including information on whether the pairing is successful or not on a primary assembly side.

9. The charging communication method of claim 1, further comprising:
performing an alignment check in cooperation with the SECC;
performing a cable check and precharging and then starting a power transfer in cooperation with the SECC; and
monitoring and controlling a power transfer process in cooperation with the SECC.

10. The charging communication method of claim 9, wherein performing the alignment check in cooperation with the SECC comprises:
transmitting a first DWPT alignment check request message to the SECC;
receiving a first DWPT alignment check response message from the SECC;
transmitting a second DWPT alignment check request message for finishing the alignment check to the SECC; and
receiving a second DWPT alignment check response message for finishing the alignment check from the SECC.

11. A charging communication handoff method for electric vehicle charging, the method comprising:
receiving, by an electric vehicle communication controller (EVCC) mounted in an electric vehicle, a response message to a handoff request message from a first supply equipment communication controller (SECC) correlated with a first primary assembly transmitting power to an electric vehicle by a dynamic wireless power protocol (D-WPT) while the electric vehicle is in motion;
performing, by the EVCC, probing and association in cooperation with a second SECC correlated with a second primary assembly suitable for transmitting power to the electric vehicle by the D-WPT based on the response message to the handoff request message; and
when probing and association with the second SECC are successful, transmitting, by the EVCC, a message requesting to terminate the power transfer to the first SECC.

12. The charging communication handoff method of claim 11, further comprising:
transmitting, by the first SECC, a request message requesting information on adjacent APs or information on at least one SECCs capable of providing a D-WPT service to a first access point (AP) controller managing a coverage of a first access point where the first SECC is located;
broadcasting, by the first AP controller, a steering request message including a request for the information on the at least one SECCs capable of providing the D-WPT service;
transmitting, by the second AP controller managing a coverage of a second access point where the second SECC is located, a steering response message including information on the second SECC to the first AP controller; and
receiving, by the first SECC, a response message including information on the second SECC from the first AP controller.

13. The charging communication handoff method of claim 11, further comprising:
transmitting, by the first SECC, a neighbor report request message to a first SDP entity related to the first SECC;
transmitting, by the first SDP entity, a multiple AP controller initiate request message to a first AP controller managing a coverage of a first access point where the first SDP entity and the first SECC are located;
receiving, by the first SDP entity, a multiple AP controller initiate response message from the first AP controller; and
receiving, by the first SECC, a neighbor report response message from the first SDP entity.

14. The charging communication handoff method of claim 11, wherein performing, by the EVCC, probing and association in cooperation with the second SECC correlated with the second primary assembly comprises:
transmitting, by the EVCC, a probe request message related to a D-WPT service to the second SECC;
receiving, by the EVCC, a probe response message related to the D-WPT service from the second SECC;
transmitting, by the EVCC, an association request message related to the D-WPT service to the second SECC; and
receiving, by the EVCC, an association response message including information on a success of the D-WPT service from the second SECC.

15. The charging communication handoff method of claim 11, further comprising:
monitoring, by the EVCC and the first SECC, a power transfer status between the first primary assembly and a secondary assembly; and
transmitting, by the EVCC, a handoff request message to the first SECC.

16. An electric vehicle communication controller (EVCC) mounted in an electric vehicle and correlated with a secondary assembly receiving power from a primary assembly, comprising:
a processor configured to receive at least one instruction from a memory and executing the at least one instruction,
wherein the processor, when executing the at least one instruction, is configured to:
perform an association with a supply equipment communication controller (SECC) correlated with the primary assembly transferring power to the electric vehicle based on compatibility information shared between the EVCC and the SECC;
identify the SECC providing a dynamic wireless power protocol (D-WPT) based on an SECC discovery protocol (SDP) related to the SECC; and
identify a common protocol applicable between the SECC and the EVCC.

17. The EVCC of claim 16, wherein, when the processor performs the association with the SECC by executing the at least one instruction, the processor is further configured to:
receive a beacon message broadcast by the SECC as a part of a wireless local area network (WLAN) scanning process;
transmit an association request message to the SECC identified based on the beacon message; and
receive an association response message including information indicating a success of the association from the SECC.

18. The EVCC of claim 16, wherein, when the processor identifies the SECC providing the D-WPT based on the SDP related to the SECC by executing the at least one instruction, the processor is further configured to:
broadcast an SDP request message related to the EVCC; and
receive an SDP response message from an SDP entity related to the SECC,
wherein, when the processor identifies the common protocol applicable between the SECC and the EVCC by executing the at least one instruction, the processor is further configured to:
transmit a supported application protocol request message to the SDP entity related to the SECC; and
receive a supported application protocol response message from the SDP entity.

19. The EVCC of claim 16, wherein, by executing the at least one instruction, the processor is further configured to:
perform a negotiation for positioning, pairing, and alignment check in cooperation with the SECC;
perform a vehicle positioning in cooperation with the SECC; and
perform a pairing in cooperation with the SECC.

20. The EVCC of claim 16, wherein, by executing the at least one instruction, the processor is further configured to:
perform an alignment check in cooperation with the SECC;
perform a cable check and precharging and then start a power transfer in cooperation with the SECC; and
monitor and control a power transfer process in cooperation with the SECC.
